(19) **Europäisches Patentamt / European Patent Office / Office européen des brevets**

(11) **EP 3 258 287 B1**

(12) **EUROPEAN PATENT SPECIFICATION**

(45) Date of publication and mention of the grant of the patent:
**21.08.2019 Bulletin 2019/34**

(21) Application number: **16174621.9**

(22) Date of filing: **15.06.2016**

(51) Int Cl.:
*G01S 5/04* *(2006.01)*     *G01S 3/02* *(2006.01)*

(54) **AN APPARATUS AND ASSOCIATED METHODS FOR LOCATION POSITIONING**

VORRICHTUNG UND ENTSPRECHENDE VERFAHREN ZUR STANDORTBESTIMMUNG

APPAREIL ET PROCÉDÉS ASSOCIÉS POUR POSITIONNEMENT D'EMPLACEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2017 Bulletin 2017/51**

(73) Proprietor: **Nokia Technologies Oy**
**02610 Espoo (FI)**

(72) Inventors:
- **Eronen, Antti Johannes**
  **33820 Tampere (FI)**
- **Lehtiniemi, Arto Juhani**
  **33880 Lempäälä (FI)**
- **Leppänen, Jussi Artturi**
  **33580 Tampere (FI)**
- **Kolmonen, Veli-Matti**
  **02920 Espoo (FI)**

(74) Representative: **Potter Clarkson**
**The Belgrave Centre**
**Talbot Street**
**Nottingham NG1 5GG (GB)**

(56) References cited:
**WO-A1-2012/148721**     **WO-A1-2013/179090**
**US-A1- 2007 060 098**

- NICULESCU D ET AL: "Ad hoc positioning system (APS) using AOA", IEEE INFOCOM 2003. TWENTY-SECOND ANNUAL JOINT CONFERENCE OF THE IEEE COMPUTER AND COMMUNICATIONS SOCIETIES (IEEE CAT. NO.03CH37428) IEEE PISCATAWAY, NJ, USA,, vol. 3, 1 January 2003 (2003-01-01), pages 1734-1743vol, XP002485169, DOI: 10.1109/INFCOM.2003.1209196

## Description

### Technical Field

The present disclosure relates to the field of location positioning, associated methods, computer programs and apparatus. Certain disclosed aspects/examples relate to the calibration of an arrangement of at least two locators of a positioning system.

### Background

Positioning systems are used to determine the position of an object in a space. The positioning system may include a plurality of locators spatially distributed around the space that are configured to receive a signal from the object or a locating tag associated therewith in order to determine the position of the object. In order for the positioning system to determine the location of the object relative to the arrangement of the locators, the relative positions of the locators must be determined in a calibration procedure. WO2013/179090 discloses a method of determining location and orientation of directional transceivers. US2007/0060098 discloses a radio frequency location determination system.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising means: in respect of an arrangement of at least two locators for determining the location of a tag of unknown location using a direction of arrival measurement technique, the at least two locators each capable of emitting a signal detectable by the other of the at least two locators and determining at least a relative direction, measured with respect to an origin-direction of the particular locator, of a received signal from the tag and the other of the at least two locators, the locators being individually identifiable to each other, provide for calibration of the arrangement;

    i) based on an orientation of a calibration stick relative to the origin-direction of a first locator of the at least two locators, the calibration stick comprising a first calibration stick tag and a second calibration stick tag, the orientation of the calibration stick based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;

    ii) based on a second-locator-direction to the second locator of the at least two locators from the first locator relative to the origin-direction of the first locator, said direction based on a signal received from the second locator by the first locator;

    iii) based on a first-locator-direction to the first locator from the second locator relative to the origin-direction of the second locator, said direction based on a signal received from the first locator by the second locator;

    iv) based on at least one of

        a first-tag-direction to the first calibration stick tag from the second locator relative to the origin-direction of the second locator, said direction based on a third calibration signal received by the second locator from the first calibration stick tag; and
        a second-tag-direction to the second calibration stick tag from the second locator relative to the origin-direction of the second locator, said direction based on a fourth calibration signal received by the second locator from the second calibration stick tag;

the calibration of the arrangement provided by determination of the distance between the first and second locators based on the known distance between first calibration stick tag and the second calibration stick tag, the orientation of the calibration stick relative to the first locator, the first-locator-direction, the second-locator-direction and the at least one of the first-tag-direction and the second-tag-direction thereby allowing for the tag of unknown location to be located relative to the arrangement of at least two locators by the direction of arrival measurement technique using a signal received from the tag by the first locator and the second locator and the distance between the first and second locators.

In one or more embodiments, the distance $d_1$ between the first locator and the second locator is provided by the following equation:

$$d_1 = \frac{l/2}{\sin a_1} * \sin(c_1)$$

Where $l$ comprises the distance between the first calibration stick tag and the second calibration stick tag, $a_1$ comprises the angle between the first-locator-direction and the first-tag-direction and $c_1 = \pi - a_1 - b_1$ where $b_1$ comprises an angle between the second-locator-direction and the direction to the first calibration stick tag from the first locator. In one or more examples, the angle

$b_1$ may be calculated from the orientation of the calibration stick as defined in part (i) above and the second-locator-direction as defined in part (ii) above, while the angle $a_1$ may be calculated from the first-locator-direction defined in part (iii) and, in this example, the first-tag-direction defined in part (iv) above.

In one or more embodiments, the distance $d_1$ between the first locator and the second locator is provided by the following equation:

$$d_1 = \frac{l/2}{\sin a_2} * \sin(c_2)$$

Where $l$ comprises the distance between the first calibration stick tag and the second calibration stick tag, $a_2$ comprises the angle between the first-locator-direction and the second-tag-direction and $c_2 = \pi - a_2 - b_2$ where $b_2$ comprises an angle between the second-locator-direction and the direction to the second calibration stick tag from the first locator. In one or more examples, the angle $b_2$ may be calculated from the orientation of the calibration stick as defined in part (i) above and the second-locator-direction as defined in part (ii) above, while the angle $a_2$ may be calculated from the first-locator-direction defined in part (iii) and, in this example, the second-tag-direction defined in part (iv) above.

In one or more examples, the distance $d_1$ may be determined in terms of $a_1$ and $c_1$ as well as $a_2$ and $c_2$. In one or more examples, the two results for $d_1$ may be averaged.

In one or more embodiments, the calibration of the arrangement is performed absent of user input location information comprising the locations of the at least two locators relative to one another.

In one or more embodiments, the locators are configured to determine the location of a tag of RFID type, the signal received from the tag comprising a return RFID signal, generated in response to an excitation signal from the locator.

In one or more embodiments, one or more of the first calibration stick tag and the second calibration stick tag are RFID tags and the corresponding first, second, third and fourth calibration signals comprise return RFID signals, generated in response to an excitation signal from the locator receiving the return RFID signals.

In one or more embodiments, each locator is configured to determine the direction of arrival of a signal relative to the origin-direction, the origin-direction perpendicular to a locator axis, each locator of the arrangement having the direction of their locator axis in common. Thus each of the locators may be oriented upright such that the locator axis extends vertically and the locator determines the direction of arrival along a substantially horizontal plane. In one or more examples, the locator axis may differ between locators and the orientation of each locator may be provided to each other locator such that calibration may be performed.

In one or more embodiments, the one or both of the first and second calibration stick tags are in communication with an orientation sensor configured to determine the orientation of the calibration stick relative to a global coordinate system, and wherein the one or both of the first and second calibration signals includes orientation values determined by said orientation sensor.

In one or more embodiments, the apparatus provides for calibration in response to the orientation values being indicative of the calibration stick being stationary.

In one or more examples, the orientation values, being relative to a global coordinate system, are used to calibrate the arrangement relative to a further arrangement of at least two locators.

In one or more embodiments, the calibration is provided in response to user input to begin a calibration process. In one or more embodiments, the calibration is provided in response to detection by the first location that the calibration stick is positioned relative to the first locator. In one or more embodiments, one or more of the calibration stick and locator is configured such that the calibration stick and locator are in physical contact when the calibration stick is positioned relative to the locator.

In one or more embodiments, each locator is provided with an indicator to show that it has been calibrated relative to at least one other locator.

In one or more embodiments, the indicator comprise one or more of;

a visual indicator;
a visual indicator comprising different colours to designate calibrated and uncalibrated states;
an audible indicator; and
a haptic indicator.

In one or more embodiments, the arrangement includes at least a third locator and the calibration of the arrangement further includes determination of the direction and the distance to one or more of the first and second locators from the third locator, the calibration stick positioned relative to the third locator such that the first calibration stick tag and the second calibration stick tag are substantially equidistant from the third locator.

In one or more embodiments, calibration is provided in response to a determination of which of the two or more locators is designated the first locator by virtue of the calibration stick being located therewith, the determination of the first locator provided by one or more of;

i) user input;
ii) a signal strength received from the first calibration stick tag and the second calibration stick tag exceeding a threshold;
iii) a relative signal strength of a signal received from the first calibration stick tag and a signal received from the second calibration stick tag;

iv) the relative direction of signals received from the first calibration stick tag and the second calibration stick tag being in accordance with a known shape or configuration of the calibration stick when positioned with the locator;

v) a sensor of the locator detecting placement of the calibration stick therewith.

In one or more embodiments, the apparatus comprises an audio source location determination apparatus for a spatial audio system to determine the location of audio sources in a space and provide for spatial audio mixing.

In a further aspect there is provided a method, the method comprising;

in respect of an arrangement of at least two locators for determining the location of a tag of unknown location using a direction of arrival measurement technique, the at least two locators each capable of emitting a signal detectable by the other of the at least two locators and determining at least a relative direction, measured with respect to an origin-direction of the particular locator, of a received signal from the tag and the other of the at least two locators, the locators being individually identifiable to each other, the method comprising providing for calibration of the arrangement;

i) based on an orientation of a calibration stick relative to the origin-direction of a first locator of the at least two locators, the calibration stick comprising a first calibration stick tag and a second calibration stick tag, the orientation of the calibration stick based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;

ii) based on a second-locator-direction to the second locator of the at least two locators from the first locator relative to the origin-direction of the first locator, said direction based on a signal received from the second locator by the first locator;

iii) based on a first-locator-direction to the first locator from the second locator relative to the origin-direction of the second locator, said direction based on a signal received from the first locator by the second locator;

iv) based on at least one of

a first-tag-direction to the first calibration stick tag from the second locator relative to the origin-direction of the second locator, said direction based on a third calibration signal received by the second locator from the first calibration stick tag; and

a second-tag-direction to the second calibration stick tag from the second locator relative to the origin-direction of the second locator, said direction based on a fourth calibration signal received by the second locator from the second calibration stick tag;

the calibration of the arrangement provided by determination of the distance between the first and second locators based on the known distance between first calibration stick tag and the second calibration stick tag, the orientation of the calibration stick relative to the first locator, the first-locator-direction, the second-locator-direction and the at least one of the first-tag-direction and the second-tag-direction thereby allowing for the tag of unknown location to be located relative to the arrangement of at least two locators by the direction of arrival measurement technique using a signal received from the tag by the first locator and the second locator and the distance between the first and second locators.

In a further aspect there is provided a locator system comprising at least two locators for determining the location of a tag of unknown location using a direction of arrival measurement technique, the at least two locators each capable of emitting a signal detectable by the other of the at least two locators and determining at least a relative direction of a received signal from the tag and the other of the at least two locators, measured with respect to an origin-direction of the particular locator, the locators being individually identifiable to each other, the system further including a calibration stick comprising a first calibration stick tag and a second calibration stick tag and computer program code configured to, when run on at least one processor having associated memory:

provide for calibration of the arrangement;

i) based on an orientation of the calibration stick relative to the origin-direction of a first locator of the at least two locators, the orientation of the calibration stick based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;

ii) based on a second-locator-direction to the second locator of the at least two locators from the first locator relative to the origin-direction of the first locator, said direction based on a signal received from the second locator by the first locator;

iii) based on a first-locator-direction to the first locator from the second locator relative to the origin-direction of the second locator, said direction based on a signal received from the first locator by the second locator;

iv) based on at least one of

a first-tag-direction to the first calibration stick tag from the second locator relative to the origin-direction of the second locator, said direction based on a third calibration signal received by the second locator from the first calibration stick tag; and

a second-tag-direction to the second calibration stick tag from the second locator relative to the origin-direction of the second locator, said direction based on a fourth calibration signal received by the second locator from the second calibration stick tag;

the calibration of the arrangement provided by determination of the distance between the first and second locators based on the known distance between first calibration stick tag and the second calibration stick tag, the orientation of the calibration stick relative to the first locator, the first-locator-direction, the second-locator-direction and the at least one of the first-tag-direction and the second-tag-direction thereby allowing for the tag of unknown location to be located relative to the arrangement of at least two locators by the direction of arrival measurement technique using a signal received from the tag by the first locator and the second locator and the distance between the first and second locators.

In one or more embodiments, one or more of:

the locators include a mount configured to receive the calibration stick specifically such that the first calibration stick tag and the second calibration stick tag are substantially equidistant from the locator; and the calibration stick includes a body configured to specifically engage with each of the locators such that the first calibration stick tag and the second calibration stick tag are substantially equidistant from the locator.

In a further aspect there is provided a computer readable medium comprising computer program code stored thereon, the computer readable medium and computer program code being configured to, when run on at least one processor, perform at least the following:

in respect of an arrangement of at least two locators for determining the location of a tag of unknown location using a direction of arrival measurement technique, the at least two locators each capable of emitting a signal detectable by the other of the at least two locators and determining at least a relative direction, measured with respect to an origin-direction of the particular locator, of a received signal from the tag and the other of the at least two locators, the locators being individually identifiable to each other, the method comprising providing for calibration of the arrangement;

i) based on an orientation of a calibration stick relative to the origin-direction of a first locator of the at least two locators, the calibration stick comprising a first calibration stick tag and a second calibration stick tag, the orientation of the calibration stick based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;

ii) based on a second-locator-direction to the second locator of the at least two locators from the first locator relative to the origin-direction of the first locator, said direction based on a signal received from the second locator by the first locator;

iii) based on a first-locator-direction to the first locator from the second locator relative to the origin-direction of the second locator, said direction based on a signal received from the first locator by the second locator;

iv) based on at least one of

a first-tag-direction to the first calibration stick tag from the second locator relative to the origin-direction of the second locator, said direction based on a third calibration signal received by the second locator from the first calibration stick tag; and

a second-tag-direction to the second calibration stick tag from the second locator relative to the origin-direction of the second locator, said direction based on a fourth calibration signal received by the second locator from the second calibration stick tag;

the calibration of the arrangement provided by determination of the distance between the first and second locators based on the known distance between first calibration stick tag and the second calibration stick tag, the orientation of the calibration stick relative to the first locator, the first-locator-direction, the second-locator-direction and the at least one of the first-tag-direction and the second-tag-direction thereby allowing for the tag of unknown location to be located relative to the arrangement of at least two locators by the direction of arrival measurement technique using a signal received from the tag by the first locator and the second locator and the distance between the first and second locators.

In a further aspect there is provided an apparatus, the apparatus comprising means, in respect of an arrangement of at least two locators for determining the location of a tag of unknown location using a direction of arrival measurement technique, the at least two locators each capable of emitting a signal detectable by the other of the at least two locators and determining at least a relative direction, measured with respect to an origin-direction of the particular locator, of a received signal from the tag and the other of the at least two locators, the locators being individually identifiable to each other, configured to provide for calibration of the arrangement;

i) based on an orientation of a calibration stick relative to the origin-direction of a first locator of the at least two locators, the calibration stick comprising a first calibration stick tag and a second calibration stick tag, the orientation of the calibration stick based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;

ii) based on a second-locator-direction to the second locator of the at least two locators from the first locator relative to the origin-direction of the first locator, said direction based on a signal received from the second locator by the first locator;

iii) based on a first-locator-direction to the first locator from the second locator relative to the origin-direction of the second locator, said direction based on a signal received from the first locator by the second locator;

iv) based on at least one of

a first-tag-direction to the first calibration stick tag from the second locator relative to the origin-direction of the second locator, said direction based on a third calibration signal received by the second locator from the first calibration stick tag; and

a second-tag-direction to the second calibration stick tag from the second locator relative to the origin-direction of the second locator, said direction based on a fourth calibration signal received by the second locator from the second calibration stick tag;

the calibration of the arrangement provided by determination of the distance between the first and second locators based on the known distance between first calibration stick tag and the second calibration stick tag, the orientation of the calibration stick relative to the first locator, the first-locator-direction, the second-locator-direction and the at least one of the first-tag-direction and the second-tag-direction thereby allowing for the tag of unknown location to be located relative to the arrangement of at least two locators by the direction of arrival measurement technique using a signal received from the tag by the first locator and the second locator and the distance between the first and second locators.

The present disclosure includes one or more corresponding aspects, examples or features in isolation or in various combinations whether or not specifically stated (including claimed) in that combination or in isolation. Corresponding means and corresponding functional units (e.g. single direction of arrival locator) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

Brief Description of the Figures

A description is now given, by way of example only, with reference to the accompanying drawings, in which:

figure 1 illustrates a plurality of locators and the axis around which they measure the direction of arrival of a signal;
figure 2 illustrates an positioning system including an arrangement of at least two locators and an apparatus for calibrating the positioning system;
figure 3 illustrates an example calibration stick;
figure 4 illustrates angle of arrival measurements for a second and third of the at least two locators;
figure 5 illustrates the use of indicators on the locators to indicate at least a calibrated and un-calibrated condition;
figure 6 illustrates angle of arrival measurements for the third and a first of the at least two locators;
figure 7 illustrates the arrangement of locators and the distances between them that allow for the arrangement to be calibrated;
figure 8 illustrates the calibration calculation performed to determine the distance d1 shown in figure 7;

figure 9 illustrates a flowchart according to a method of the present disclosure; and

figure 10 illustrates schematically a computer readable medium providing a program.

Description of Example Aspects

Positioning systems may use the measurements taken by one or more locators to determine the position of an object. In one or more positioning systems, a plurality of locators are positioned at disparate geographic locations in a space. To identify the location of an object in the space, the object may be associated with a tag that is capable of emitting a wireless signal that can be received by the locators. The measurement of the properties of the received signal may be used, such as by methods of triangulation, to locate the position of the tag in the space relative to the locators. In order for the positioning system to determine the location of the tag relative to the arrangement of the locators, the relative positions of the locators must be determined in a calibration procedure. For positioning systems that place no obligation on the user to positon the plurality of locators at defined locations, providing an efficient calibration procedure is important.

The locators may be of direction of arrival (DoA) type which are configured to determine the direction from which the signal is received. Such DoA locators may determine the signal strength of a received signal over a 360° range to identify the direction of the strongest signal and therefore the direction of the signal. Other DoA locators may use a plurality of spaced antennas and the timing of the reception of the signal at each antenna is used to identify the direction. It will be appreciated that DoA locators may use other techniques than these.

In one or more examples, the DoA locators may also determine the strength of a received signal, which, if the strength at the signal's source is known or can be deduced, a calculation of range can be determined. In the examples herein the DoA locators determine the direction of arrival of the signal and not the range of the received signal.

A return signal from a tag may be used in the positioning system. For example, a locator may emit a broadcast signal and a tag in receipt of the signal may reply with a signal from which the direction to that tag can be determined. The tag may be passive in that it uses the energy of the broadcast signal to send the return signal. In other example, the tag may include its own power source for use in emitting the return signal, which it may do so at least independently of a locator-broadcast signal. The return signal may include a unique identifier of the tag enabling measurements taken from different locators to be collated and used in the overall positioning of the same object. An example of such a return signal based system comprises a Radio Frequency Identification (RFID) tag based system.

The positioning system may comprise a plurality of DoA locators and the angle measurements may be used to identify the location of a tag within a local coordinate space defined by the position of the plurality of DoA locators. If the location of the positioning system in a global coordinate space is known then the geographic location of the tag may be determined (such as in terms of a longitude, latitude and altitude).

The positioning system may be a portable positioning system for temporary use at a location. Thus, the positioning system may be required to be easy to set up and use and then easy to dismantle and move to a new location. When capturing a space for presenting as virtual reality (VR) content it may be desirable to track the objects appearing in the space. The positioning system may be used to identify the location of microphones within a space when capturing virtual or augmented reality content. For example, virtual reality content may include spatial audio where the audio is presented to the consumer of the VR content such that it is perceived as originating from a direction that corresponds to the relevant position in the visual imagery of the VR content. Thus, the voice of an actress may be presented as coming from the same direction as the direction in which the imagery of that actress speaking her dialogue is displayed. Providing such spatial audio may require the location of the object, actress, actor, instrument etc, or a personal microphone thereof to be tracked during virtual reality content capture. Thus, the location of the microphones may be used to render spatial or 3-d audio effects for use in presentation of the content to a user, or to identify the sources of the audio in visual imagery captured by a camera of a virtual reality content capture device (such as a Nokia OZO by Nokia Technologies Oy). The positioning system described herein may be, particularly, a virtual reality content positioning system for locating objects, such as microphones, in a scene during the capture of virtual reality content. Thus, the positioning system may comprise a microphone positioning system. It will be appreciated that the positioning system has more general uses outside the field of virtual reality content capture such as audio source positioning, indoor positioning and positioning in general..

As mentioned above, positioning systems may require calibration prior to being able to identify the location of a tag in a particular space. In particular, the location of each of the locators of the positioning system relative to the other locators is required. For DoA based locators, provided each locators is capable of emitting a signal detectable by the others, then an angle to the other locators from each locator can be determined. However, each locator may measure the angle of reception of a signal relative to an origin-direction and for positioning systems where there is no obligation to point the origin-direction in a particular direction, the direction of the origin-direction of a particular locator relative to the other locators may be required for calibration of the positioning system. The distance to each locators from each other locator may require calibration as described herein.

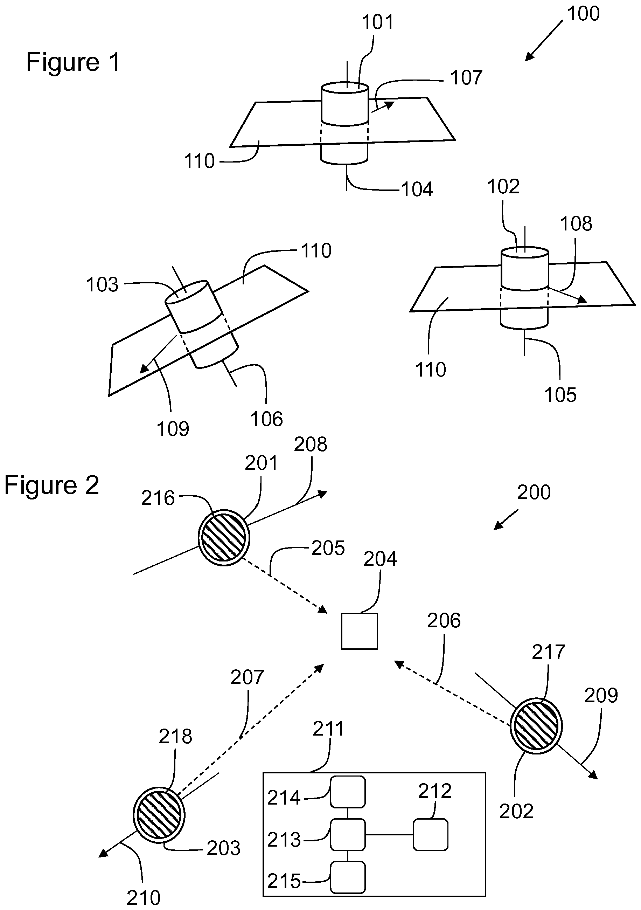

In the examples herein it is assumed that each of the locators is positioned upright and substantially in the same plane. Figure 1 shows a space 100 in which three locators 101, 102 and 103 are located. The locators may each have an axis 104, 105, 106 respectively about which the angle of reception of a signal is measured. The origin-direction of each locator 101, 102, 103 is shown as an arrow 107, 108, 109. The direction of arrival angle reported by each locator is measured from the origin-direction 107, 108, 109. In figure 1, the locator 103 is not upright and thus its axis 106 is not aligned with the axes 104, 105 of the other locators 101, 102. A plane 110 for each locator shown perpendicular to each axis 104, 105, 106 in which the direction of arrival is determined is shown for clarity and understanding. In the examples that follow, the locators are arranged in a substantially common plane with their axes 104, 105, 106 substantially perpendicular to the common plane. Thus, each may have 2 parameters (x, y) to define its positon and one for its orientation, i.e. direction of the origin direction (such as around the z-axis, which may be vertically arranged). In one or more examples, the axis of each locator may be configured to point in a common direction and the locators may be at different heights, such that 3 parameters are required to define the position (x, y, z) and one for its orientation (such as around the z-axis). In one or more examples, the axis of each locators may not necessarily be commonly aligned and 3 parameters may be required to define its position (x, y, z) and three to define its orientation (around x axis, around y axis and around z axis).

It will be appreciated that the geometric principles exemplified below may be extended to non-common-axis arranged locators.

Figure 2 illustrates a space 200 in which an arrangement of three locators 201, 202, 203 are provided to form a positioning system. The locators are to be used to locate a tag 204 of unknown location in the space 200. Each locator 201, 202, 203, comprising first locator 201, second locator 202 and third locator 203, may determine the direction of arrival 205, 206, 207 of a signal from the tag 204 relative to the origin-direction 208, 209, 210 (respectively) of the particular locator 201, 202, 203. Thus, the direction of arrival comprises an angle around the locator axis (extending into and out of the page) relative to the origin-direction 208, 209, 210.

The locators 201, 202, 203 of the positioning system may be placed at any position in the space 200 and with any orientation of the origin-direction. Thus, the positing system provides for free location and free orientation placement of the at least two locators in a space (provided the locators can practically receive a signal from a tag in the space). Thus, a calibration procedure is required for the locators 201, 202, 203. An apparatus 211 is shown for performing the calibration. The apparatus 211 is in communication with each of the locators, such as by wireless communication (e.g. Wifi or Bluetooth®). In this example, the locators act as sensors and processing for calibration and optionally positioning of tags 204 is performed by the apparatus 211. However in one or more examples, the apparatus 211 may be distributed and/or integrated with the one or more locators 201, 202, 203.

The apparatus 211 comprises a memory 212, a processor 213, an input 214 and an output 215. In this embodiment, only one processor and one memory are shown but it will be appreciated that other embodiments may utilise more than one processor and/or more than one memory (e.g. same or different processor/memory types).

In this embodiment the apparatus 211 is an Application Specific Integrated Circuit (ASIC) for a portable electronic device, optionally with a touch sensitive display. In other embodiments the apparatus 211 can be a module for such a device, or may be the device itself, wherein the processor 213 is a general purpose CPU of the device and the memory 212 is general purpose memory comprised by the device.

The input 214 allows for receipt of signalling to the apparatus 211 from further components, such as the locators 201, 202, 203 and components of a portable electronic device (like a touch-sensitive or hover-sensitive display) or the like. The output 215 allows for onward provision of signalling from within the apparatus 211 to further components such as a display screen, speaker, or vibration module or the locators 201, 202, 203. In this embodiment the input 214 and output 215 are part of a connection bus that allows for connection of the apparatus 211 to further components.

The processor 213 is a general purpose processor dedicated to executing/processing information received via the input 214 in accordance with instructions stored in the form of computer program code on the memory 212. The output signalling generated by such operations from the processor 213 is provided onwards to further components via the output 215

The memory 212 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 213, when the program code is run on the processor 108. The internal connections between the memory 212 and the processor 213 can be understood to, in one or more example embodiments, provide an active coupling between the processor 213 and the memory 212 to allow the processor 213 to access the computer program code stored on the memory 212.

In this example the input 214, output 215, processor 213 and memory 212 are all electrically connected to one another internally to allow for electrical communication between the respective components. In this example the components are all located proximate to one another so as to be formed together as an ASIC, in other words, so as to be integrated together as a single chip/circuit that can be installed into an electronic device. In other examples one or more or all of the components may be located separately from one another.

The locators 201, 202, 203 are each capable of emitting a calibration signal that is detectable by the other locators. The calibration signal may include a unique identifier such that the origin of the signal may be determined (at least in name) by the locator in receipt of the calibration signal. In other embodiments, the calibration signal may not include a unique identifier as, for example, the calibration process may proceed in a predetermined order with predetermined timings and therefore the apparatus may deduce from where the signal has come based on when it was received.

Each locator 201, 202, 203 is provided with an indicator 216, 217, 218, which in this example comprises a visual indicator. In one or more examples, the indicator may be an audio speaker, or haptic feedback element. In particular each the indicator 216, 217, 218 may comprise a visual indicator that can switch between colours (shown as patterned circles in the Figures). The indicators may be used to indicate when the locator with which a particular indicator is associated is calibrated with respect to at least one other locator or not. Figure 2 shows the indicators 216, 217, 218 displaying an uncalibrated condition (diagonal pattern).

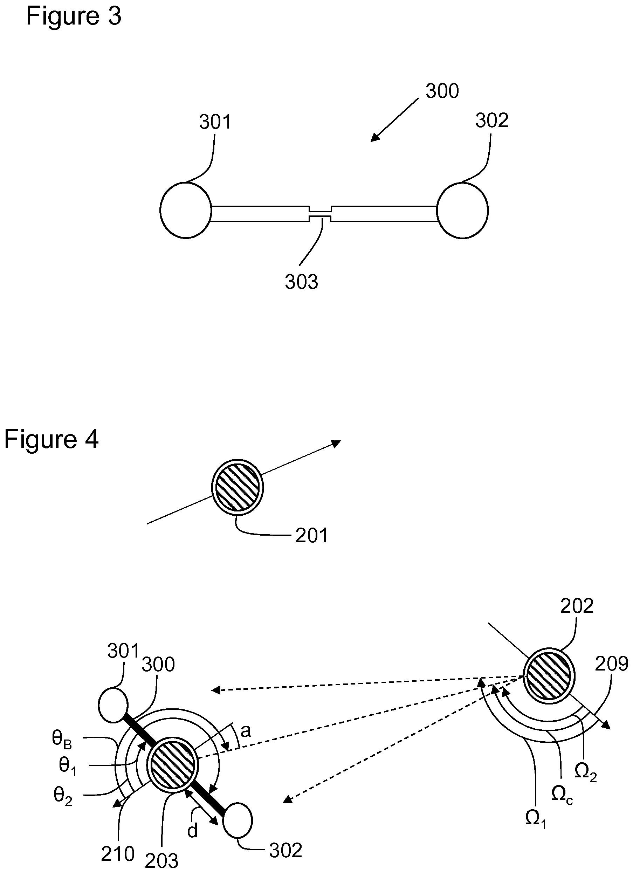

Figure 3 shows a calibration stick 300 for use in calibrating the positioning system of Figure 2. The calibration stick 300 comprises a first calibration stick tag 301 and a second calibration stick tag 302. The calibration stick tags 301, 302 having a known separation from one another. Thus, the calibration stick 300 may have a known length where the calibration stick tags are positioned at each end thereof. In this example, the calibration stick 300 is straight and configured such that it is capable of being received atop the locators 201, 202, 203. It will be appreciated that the calibration stick 300 may be of other shapes and configurations provided the distance between the first calibration stick tag 301 / second calibration stick tag 302 and the locator axis of the locator with which it is associated at the time is known. In this example, the calibration stick 300 is configured to be placed on top of the locator 201, 202, 203 when calibration is performed such that the distance between the first calibration stick tag 301 and the locator and the second calibration stick tag 302 and the locator is the same. One or more of the calibration stick 300 and locator 201, 202, 203 may be configured such as by way of physical coupling formations so that the position of the calibration stick tags 301, 302 relative to a particular locator, when the calibration stick is placed in relation to said particular locator, is known. The calibration stick 300 includes idents 303 at a central point between the first and second calibration stick tags 301, 302 for receipt within a slot (not shown) atop each locator 201, 202, 203. Thus, in one or more examples, the calibration stick may be: i) of known length and ii) configured to be arranged such that the calibration stick tags are diametrically opposed to one another relative to the axis (104, 105, 106 in Figure 1) of the locator and iii) the first and second calibration stick tags are equidistant from the axis of the locator.

Each calibration stick tag comprises, in this example, an RFID tag having a unique identifier. Each calibration stick tag may be configured to transmit a calibration signal that can be received by the locators. In one or more examples, the locators 201, 202, 203 may broadcast an excitation signal to the calibration stick tags 301, 302 and the calibration stick tags are configured to reply with a calibration signal. In other examples, the calibration stick tags provide their calibration signal autonomously e.g. not in response to an excitation signal.

Each of the calibration stick tags 301, 302 are equipped with an orientation sensor, although in other examples only one of the tags is provided with an orientation sensor or the stick 300 includes an orientation sensor, the sensed values of which are accessible to one or both of the calibration stick tags 301, 302. The orientation sensor comprises, in this example, an accelerometer sensor which can determine the x-, y-, and z-axis acceleration of the tag. This acceleration information or orientation information may be transmitted by the calibration stick tag such that the locators 201, 202, 203 and the apparatus 211 can read the values. The orientation information may form part of or be associated with the calibration signal.

Figure 4 shows a start of the calibration procedure. The calibration stick 300 has been placed by a user on top of the third locator 203. More generally, the calibration stick 300 may be placed in a known position relative to the locator such that the geometric calculations described below can be performed. The calibration procedure may start automatically on detection that the calibration stick 300 has been placed in association with one of the locators 201, 202, 203. This may be determined by the orientation values of one or both of the calibration stick tags 301, 302 comprising static values (such as for a predetermined time). Alternatively, or in addition, the user may provide user input to indicate that the calibration stick is in the appropriate positon and may include information such that the ID of locator with which the calibration stick 300 is associated. In one or more other examples, the locators 201, 202, 203 may listen for signals from the calibration stick tags 301, 302 of the calibration stick 300 and when those signals are received from the expected directions e.g. 180° separation (with knowledge of the shape of the calibration stick) and, optionally, with equal signal strength, it may be deduced that the calibration stick is associated with that locator. In one or more examples, a signal from a calibration-stick-presence sensor may be used, the calibration-stick-presence sensor being part of the locator, the calibration stick or another part of the system and configured to determine when the calibration stick is placed in the required relation of one of the locators.

The third locator 203 may determine the angle of the signal it receives from the first calibration stick tag 301, shown as $\theta_1$, and the angle of the signal it receives from the second calibration stick tag 302, shown as $\theta_2$. The distance between each calibration stick tag 301, 302 and the third locator 203 is known to be $d$, given that the length of the calibration stick 300 is known to the apparatus 211. The third locator 203 may determine the angle of the signal it receives from the second locator 202, shown as $\theta_B$. In one or more examples one of the angles $\theta_1$ and $\theta_2$ may be determined. However, the determination of both, with knowledge of the shape of the calibration stick, may provide confirmation that the stick is placed across the third locator as expected.

With respect to the locators 201, 202 with which the calibration stick 300 is not associated, any of them which are in range of the calibration signals emitted by the calibration stick tags 301, 302 may also calibrated with respect to locator 203.

Each locator may be capable of emitting a calibration signal for receipt by any other locator that forms the positioning system and/or the apparatus 211. The number of locators 201, 202, 203 and the ID of each locator 201, 202, 203 may be discoverable by the apparatus 211.

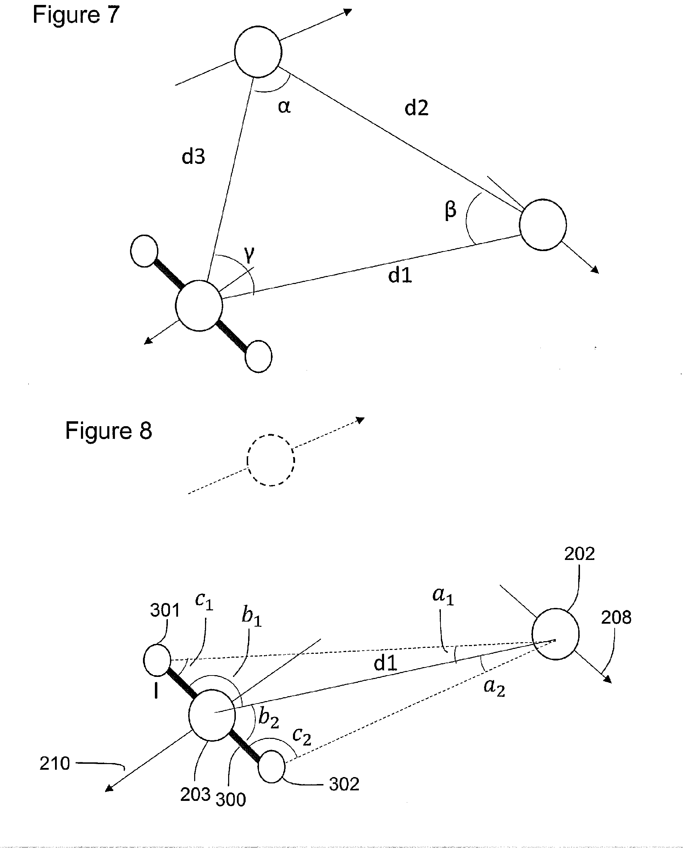

The angle towards the second locator 202 measured from the third locator 203 with respect to the origin-direction 210 may be determined. Likewise, the angle towards the third locator 203 measured from the second locator 202 with respect to the origin-direction 209 may be determined. A similar procedure may be provided between the third locator 203 and the first locator 201 and the between the first locator 201 and the second locator 202. Thus, with reference to Figure 7, the apparatus 211 may be configured to determine the angles $\alpha$, $\beta$ and $\gamma$ from the direction of arrival angles measured by each of the locators with respect to the other locators of the positioning system.

Each of the locators with which the calibration stick 300 is not associated may also determine the angle of the direction of arrival of the calibration signal received from at least one of the first calibration stick tag 301 and the calibration signal received from the second calibration stick tag 302. In this example, only the second locator 202 is in range of the calibration signals. Therefore, by measurement by the second locator 202, on receipt of the calibration signal from calibration stick tag 301, an angle $\Omega_1$, from its origin-direction 209 towards the first calibration stick tag 301 may be determined. On receipt of the calibration signal from the second calibration stick tag 302, an angle $\Omega_2$, from its origin-direction 209 towards the second calibration stick tag 302 may be determined. The angle $\Omega_C$ comprises the angle of locator 203 as seen from locator 202, determined from the calibration signal received from third locator 203 by the second locator 202. As will be explained further below the determination of both the angles $\Omega_1$ and $\Omega_1$ may provide for a double check of the determined distance between the second and third locators 202, 203.

As will be explained further below, the apparatus 211 may determine the distance d1 (see Figure 7) using the angles measured by the locators 203, 202 and the knowledge of the length of the calibration stick.

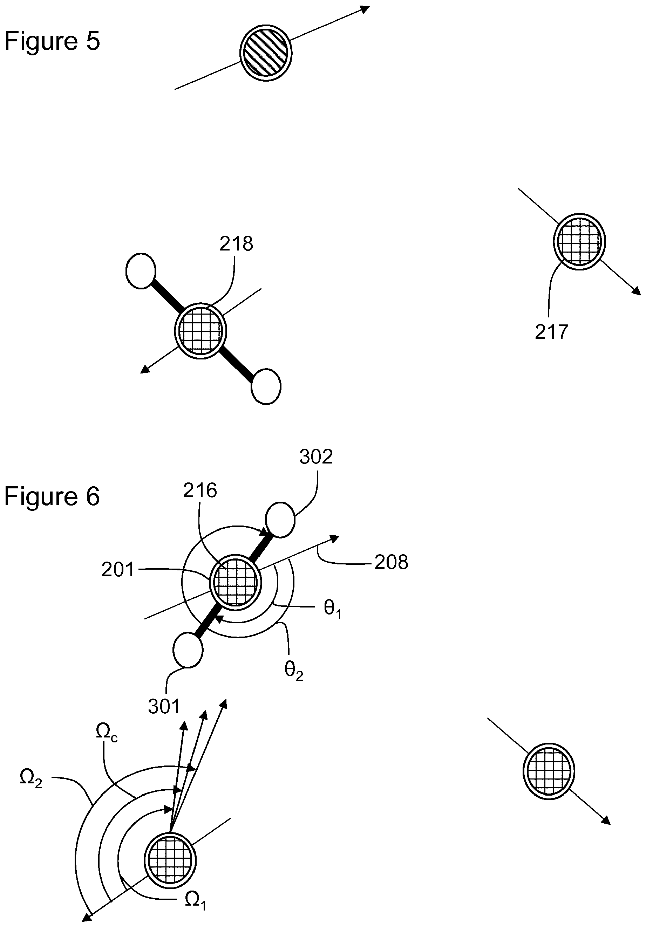

Figure 5 shows the indicators 218, 217 displaying a "calibrated" condition (square checkered line pattern) indicative of the distance d1 being determined. The indicator 216 of the first locator 201 still shows an uncalibrated condition, as it was not able to receive the calibration signals of the first and second calibration stick tags 301, 302 of the calibration stick 300 and therefore neither the distance d3 nor d2 has been determined.

The calibration procedure may continue to a second stage (if required) in which the user moves the calibration stick 300 to one of the other locators 201, 202, such as to the first locator 201 which remains in an uncalibrated condition. A similar procedure as described above is repeated for the first locator 201 having the calibration stick placed thereon. Accordingly, with reference to Figure 6, the first locator 201 may determine the angle of the signal it receives from the first calibration stick tag 301, shown as $\theta_1$, and the angle of the signal it receives from the second calibration stick tag 302, shown as $\theta_2$. The length of the calibration stick 300 is known to the apparatus.

Further the angle towards the first locator 201, the first calibration stick tag 301 and the second calibration stick tag 302 as seen by the third locator 203 are shown as angles $\Omega_C$, $\Omega_1$, $\Omega_2$ respectively, determined by the receipt of the calibration signals from the first locator 201, the first calibration stick tag 301 and the second calibration stick tag 302.

As will be explained further below, the apparatus 211 may determine the distance d3 and optionally d2 (see Figure 7) using the angles measured by the locators 201, 203 and the knowledge of the length of the calibration stick 300. Accordingly, the indicator 216 of the first locator 201 may change to a calibrated condition.

In one or more embodiments, one or more further calibration sticks 300 may be provided and placed in association with a corresponding one or more of the locators 201, 202, 203, simultaneously, for example.

Figure 8 shows an example of the calculations performed to determine the distance between two locators, in this case, the third locator 203 and the second locator 202. Based on the geometry, the measured direction of arrival angles and the length of the calibration stick 300 can be used to calculate the position of all the locators 201, 202, 203.

For example, Figure 8 illustrates the calibration stick 300 associated with the third locator 203, which may be notionally defined to reside at a coordinate (0, 0) in the space and have orientation of 0°.

Figure 8 also shows angles $a_1$ and $a_2$ which can be calculated from angles $\Omega_1$, $\Omega_2$, and $\Omega_C$ and angles $b_1$ and $b_2$ which can be calculated from angles $\theta_1$, $\theta_2$, and $\theta_B$. Using angles $a_1$, $a_2$ and $b_1$, $b_2$, angles $c_1$ and $c_2$ can be calculated based on known trigonometry as $c_1 = \pi -$

$a_1$ - $b_1$ and $c_2 = \pi$ - $a_2$ - $b_2$. It will be appreciated therefore that either stick tag 301, 302 may be deemed the first calibration stick tag as the angles $a_1$, $b_1$, $c_1$ can be used to determine $d_1$ as well as angles $a_2$, $b_2$, $c_2$.

Given the length of the calibration stick is known as *l*, the distance d1 between the third locator 203 and the second locator 202 can be calculated as

$$d_1 = \frac{l/2}{\sin a_1} * \sin(c_1)$$

Equally;

$$d_1 = \frac{l/2}{\sin a_2} * \sin(c_2)$$

Thus, the direction and the distance $d_1$ of the second locator 202 seen from the third locator 203 has been determined. It will be appreciated that the distance d1 may also be determined similarly using the angles $a_2$, $b_2$, and $c_2$.

These polar coordinates can be converted to Cartesian coordinates using known coordinate transform techniques.

Although the calibration procedure for the third and second locators 203, 202 is shown the same calculations can be used between any two locators where one has the calibration stick 300 associated therewith.

Further once the distance between two locators (e.g. $d_1$) has been established their locations can be used to determine the location of other locators using known triangulation techniques. This may be advantageous if the calibration stick 300 is not suitable (e.g. too short for accurate measurement or happens to be oriented at a disadvantageous angle).

This way, other locators or locators which are added to the positioning system later can be calibrated with or without the calibration stick 300. The presence of uncalibrated locators can be easily detected by way of a discovery process in which they transmit a unique identifier which can be detected by the other locators / apparatus 211.

It may be that a locator may start to malfunction or it may be moved during the operation of the positioning system. This can be detected as the system can be made to detect inaccurate results. In this case an auto-calibration procedure can be started. The procedure can start by re-measuring and comparing the measured DoA values from all locators to all other locators to the DoA measurements stored during a prior calibration process. If there are disparities between the values then the need for re-calibration may be detected. The need for re-calibration may be notified to the user via a display of the apparatus 211 or an indicator, for example.

If all the locators 201, 202, 203 happen to be oriented in a parallel direction with respect to the calibration stick 300 then the calibration procedure cannot be performed and the indicators 216, 217, 218 or other indicator, such as part of apparatus 211, may be configured to inform the user. This notification may be done using a sound, vibration, or light in the calibration stick 300 for example. The apparatus 211 may prompt the user to adjust the orientation of the calibration stick 300 and the calibration procedure may continue.

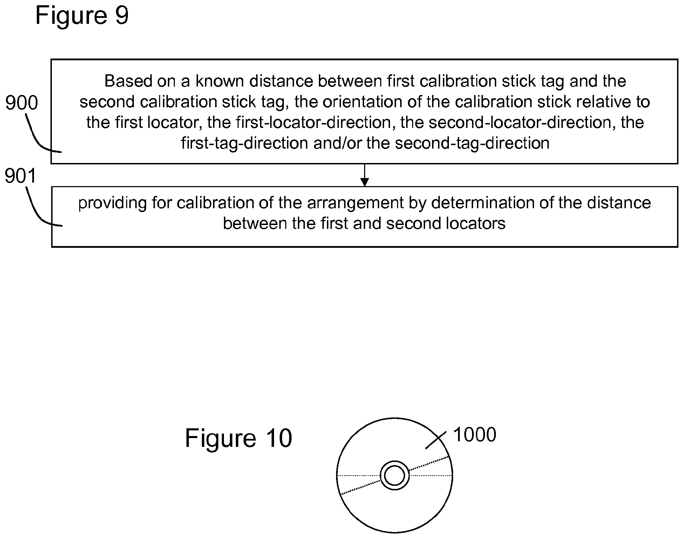

Figure 9 shows a flow diagram illustrating the steps of in respect of an arrangement of at least two locators for determining the location of a tag of unknown location using a direction of arrival measurement technique, the at least two locators each capable of emitting a signal detectable by the other of the at least two locators and determining at least a relative direction, measured with respect to an origin-direction of the particular locator, of a received signal from the tag and the other of the at least two locators, the locators being individually identifiable to each other, the method comprising, based on 900 a known distance between a first calibration stick tag and a second calibration stick tag, an orientation of the calibration stick relative to the first locator, a first-locator-direction, a second-locator-direction and at least one of a first-tag-direction and a second-tag-direction, providing for 901 calibration of the arrangement by determination of the distance between the first and second locators based on the known distance between first calibration stick tag and the second calibration stick tag, wherein;

    i) the calibration stick comprises a first calibration stick tag and a second calibration stick tag, the orientation of the calibration stick being based on a first calibration signal received from the first calibration stick tag and a second calibration signal received from the second calibration stick tag by the first locator of the at least two locators, the calibration stick tags having a known separation from one another and positioned relative to the first locator such that the first calibration stick tag and the second calibration stick tag are substantially equidistant from the first locator;
    ii) the second-locator-direction comprises the direction to the second locator of the at least two locators from the first locator relative to the origin-direction of the first locator is based on a signal received from the second locator by the first locator;
    iii) the first-locator-direction comprises the direction to the first locator from the second locator relative to the origin-direction of the second locator is based on a signal received from the first locator by the second locator;
    iv) the first-tag-direction comprises the direction to the first calibration stick tag from the second locator relative to the origin-direction of the second locator is based on a third calibration signal received by the second locator from the first calibration stick tag;
    v) the second-tag-direction comprises the direction to the second calibration stick tag from the second locator relative to the origin-direction of the second locator is based on a fourth calibration signal received by the second locator from the second calibration stick tag.

Figure 10 illustrates schematically a computer/processor readable medium 1000 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable device or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice.

Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising means,
   in respect of an arrangement of at least two locators (201, 202, 203) for determining the location of a tag (204) of unknown location using a direction of arrival measurement technique, the at least two locators (201, 202, 203) each capable of emitting a signal detectable by the other of the at least two locators and determining at least a relative direction (205, 206, 207), measured with respect to an origin-direction (208, 209, 210) of the particular locator, of a received signal from the tag (204) and the other of the at least two locators (201, 202, 203), the locators being individually identifiable to each other, configured to provide for calibration of the arrangement;

   i) based on an orientation $(\theta_1, \theta_2)$ of a calibration stick (300) relative to the origin-direction (208, 209, 210) of a first locator of the at least two locators (201, 202, 203), the calibration stick comprising a first calibration stick tag (301) and a second calibration stick tag (302), the orientation of the calibration stick (300) based on a first calibration signal received from the first calibration stick tag (301) and a second calibration signal received from the second calibration stick tag (302) by the first locator (201) of the at least two locators, the calibration stick tags (301, 302) having a known separation from one another and positioned relative to the first locator such that the first calibration stick tag (301) and the second calibration stick tag (302) are substantially equidistant from the first locator (201, 202, 203);
   ii) based on a second-locator-direction $(\theta_A, \theta_B, \theta_C)$ to the second locator of the at least two locators from the first locator relative to the origin-direction of the first locator, said second-locator-direction based on a signal received from the second locator by the first locator;
   iii) based on a first-locator-direction $(\Omega_A, \Omega_B, \Omega_C)$ to the first locator from the second locator relative to the origin-direction of the second locator, said first-locator-direction based on a signal received from the first locator by the second locator;

   iv) based on at least one of

   a first-tag-direction $(\Omega_1)$ to the first calibration stick tag (301) from the second locator relative to the origin-direction (208, 209, 210) of the second locator, said direction based on a third calibration signal received by the second locator from the first calibration stick tag (301); and
   a second-tag-direction $(\Omega_2)$ to the second calibration stick tag (302) from the second locator relative to the origin-direction (208, 209, 210) of the second locator, said direction based on a fourth calibration signal received by the second locator from the second calibration stick tag (302);

   the calibration of the arrangement provided by determination of the distance (d1, d2, d3) between the first and second locators (201, 202, 203) based on the known distance ($l$) between first calibration stick tag (301) and the second calibration stick tag (302), the orientation of the calibration stick (300) relative to the first locator, the first-locator-direction $(\Omega_A, \Omega_B, \Omega_C)$, the second-locator-direction $(\theta_A, \theta_B, \theta_C)$ and the at least one of the first-tag-direction $(\Omega_1)$ and the second-tag-direction $(\Omega_2)$ thereby allowing for the tag (204) of unknown location to be located relative to the arrangement of at least two locators (201, 202, 203) by the direction of arrival measurement technique using a signal received from the tag (204) by the first locator and the second locator (201, 202, 203) and the distance (d1, d2, d3) between the first and second locators (201, 202, 203).

2. An apparatus according to claim 1, wherein the calibration of the arrangement is performed absent of user input location information comprising the locations of the at least two locators (201, 202, 203) relative to one another.

3. An apparatus according to claim 1 or claim 2, wherein the locators (201, 202, 203) are configured to determine the location of a tag (204) of RFID type, the signal received from the tag comprising a return RFID signal, generated in response to an excitation signal from the locator.

4. An apparatus according to any preceding claim, wherein one or more of the first calibration stick tag (301) and the second calibration stick tag (302) are RFID tags and the corresponding first, second, third and fourth calibration signals comprise return RFID signals, generated in response to an excitation signal from the locator (201, 202, 203) receiving the return RFID signals.

5. An apparatus according to any preceding claim wherein each locator (201, 202, 203) is configured to determine the direction of arrival of a signal relative to the origin-direction (208, 209, 210), the origin-direction perpendicular to a locator axis (104, 105, 106), each locator of the arrangement having the direction of their locator axis in common.

6. An apparatus according to any preceding claim, wherein the one or both of the first and second calibration stick tags (301, 302) are in communication with an orientation sensor configured to determine the orientation of the calibration stick relative to a global coordinate system, and wherein the one or both of the first and second calibration signals includes orientation values determined by said orientation sensor.

7. An apparatus according to claim 6, wherein the apparatus provides for calibration in response to the orientation values being indicative of the calibration stick (300) being stationary.

8. An apparatus according to any preceding claim wherein each locator (201, 202, 203) is provided with an indicator (216, 217, 218) to show that it has been calibrated relative to at least one other locator.

9. An apparatus according to any preceding claim wherein the arrangement includes at least a third locator (201, 202, 203) and the calibration of the arrangement further includes determination of the direction and the distance to one or more of the first and second locators from the third locator, the calibration stick (300) positioned relative to the third locator such that the first calibration stick tag (301) and the second calibration stick tag (301) are substantially equidistant from the third locator.

10. An apparatus according to any preceding claim, wherein calibration is provided in response to a determination of which of the two or more locators (201, 202, 203) is designated the first locator by virtue of the calibration stick (300) being located therewith, the determination of the first locator provided by one or more of;

   i) user input;
   ii) a signal strength received from the first calibration stick tag (301) and the second calibration stick tag (302) exceeding a threshold;
   iii) a relative signal strength of a signal received from the first calibration stick tag (301) and a signal received from the second calibration stick tag (302);
   iv) the relative direction of signals received from the first calibration stick tag (301) and the second calibration stick tag (302) being in accordance with a known shape or configuration of the calibration stick (300) when positioned with the locator;
   v) a sensor of the locator (201, 202, 203) detecting placement of the calibration stick (300) therewith.

11. An apparatus according to any preceding claim, wherein the apparatus comprises an audio source location determination apparatus for a spatial audio system to determine the location of audio sources in a space and provide for spatial audio mixing.

12. A method comprising;
in respect of an arrangement of at least two locators (201, 202, 203) for determining the location of a tag (204) of unknown location using a direction of arrival measurement technique, the at least two locators (201, 202, 203) each capable of emitting a signal detectable by the other of the at least two locators and determining at least a relative direction (205, 206, 207), measured with respect to an origin-direction (208, 209, 210) of the particular locator, of a received signal from the tag (204) and the other of the at least two locators (201, 202, 203), the locators being individually identifiable to each other, the method comprising providing for calibration of the arrangement;

   i) based on an orientation $(\theta_1, \theta_2)$ of a calibration stick (300) relative to the origin-direction (208) of a first locator of the at least two locators (201, 202, 203), the calibration stick comprising a first calibration stick tag (301) and a second calibration stick tag (302), the orientation of the calibration stick (300) based on a first calibration signal received from the first calibration stick tag (301) and a second calibration signal received from the second calibration stick tag (302) by the first locator of the at least two locators (201, 202, 203), the calibration stick tags (301, 302) having a known separation from one another and positioned relative to the first locator such that the first calibration stick tag (301) and the second calibration stick tag (302) are substantially equidistant from the first locator (201, 202, 203);
   ii) based on a second-locator-direction $(\theta_A, \theta_B, \theta_C)$ to the second locator of the at least two locators from the first locator relative to the origin-direction of the first locator, said direction based on a signal received from the second locator by the first locator;
   iii) based on a first-locator-direction $(\Omega_A, \Omega_B, \Omega_C)$ to the first locator from the second locator relative to the origin-direction of the second locator, said direction based on a signal received from the first locator by the second locator;
   iv) based on at least one of

a first-tag-direction ($\Omega_1$) to the first calibration stick tag (301) from the second locator relative to the origin-direction (208, 209, 210) of the second locator, said direction based on a third calibration signal received by the second locator from the first calibration stick tag (301); and

a second-tag-direction ($\Omega_2$) to the second calibration stick tag (302) from the second locator relative to the origin-direction (208, 209, 210) of the second locator, said direction based on a fourth calibration signal received by the second locator from the second calibration stick tag (302);

the calibration of the arrangement provided by determination of the distance (d1, d2, d3) between the first and second locators (201, 202, 203) based on the known distance (*l*) between first calibration stick tag (301) and the second calibration stick tag (302), the orientation of the calibration stick (300) relative to the first locator, the first-locator-direction ($\Omega_A$, $\Omega_B$, $\Omega_C$), the second-locator-direction ($\theta_A$, $\theta_B$, $\theta_C$) and the at least one of the first-tag-direction ($\Omega_1$) and the second-tag-direction ($\Omega_2$) thereby allowing for the tag (204) of unknown location to be located relative to the arrangement of at least two locators by the direction of arrival measurement technique using a signal received from the tag (204) by the first locator and the second locator and the distance (d1, d2, d3) between the first and second locators.

13. A locator system comprising at least two locators (201, 202, 203) for determining the location of a tag (204) of unknown location using a direction of arrival measurement technique, the at least two locators (201, 202, 203) each capable of emitting a signal detectable by the other of the at least two locators and determining at least a relative direction (205, 206, 207) of a received signal from the tag (204) and the other of the at least two locators, measured with respect to an origin-direction (208, 209, 210) of the particular locator, the locators being individually identifiable to each other, the system further including a calibration stick (300) comprising a first calibration stick tag (301) and a second calibration stick tag (302) and computer program code configured to, when run on at least one processor having associated memory:

provide for calibration of the arrangement;

i) based on an orientation of the calibration stick (300) relative to the origin-direction (208, 209, 210) of a first locator of the at least two locators (201, 202, 203), the orientation of the calibration stick based on a first calibration signal received from the first calibration stick tag (301) and a second calibration signal received from the second calibration stick tag (302) by the first locator of the at least two locators, the calibration stick tags (301, 302) having a known separation from one another and positioned relative to the first locator such that the first calibration stick tag and the second calibration stick tag are substantially equidistant from the first locator;

ii) based on a second-locator-direction ($\theta_A$, $\theta_B$, $\theta_C$) to the second locator of the at least two locators from the first locator relative to the origin-direction of the first locator, said direction based on a signal received from the second locator by the first locator;

iii) based on a first-locator-direction ($\Omega_A$, $\Omega_B$, $\Omega_C$) to the first locator from the second locator relative to the origin-direction (208, 209, 210) of the second locator, said direction based on a signal received from the first locator by the second locator;

iv) based on at least one of

a first-tag-direction ($\Omega_1$) to the first calibration stick tag (301) from the second locator relative to the origin-direction (208, 209, 210) of the second locator, said direction based on a third calibration signal received by the second locator from the first calibration stick tag; and

a second-tag-direction ($\Omega_2$) to the second calibration stick tag (302) from the second locator relative to the origin-direction (208, 209, 210) of the second locator, said direction based on a fourth calibration signal received by the second locator from the second calibration stick tag;

the calibration of the arrangement provided by determination of the distance (d1, d2, d3) between the first and second locators (201, 202, 203) based on the known distance (*l*) between first calibration stick tag and the second calibration stick tag, the orientation of the calibration stick (300) relative to the first locator, the first-locator-direction ($\Omega_A$, $\Omega_B$, $\Omega_C$), the second-locator-direction ($\theta_A$, $\theta_B$, $\theta_C$) and the at least one of the first-tag-direction ($\Omega_1$) and the second-tag-direction ($\Omega_2$) thereby allowing for the tag (204) of unknown location to be located relative to the arrangement of at least two locators (201, 202, 203) by the direction of arrival measurement technique using a signal received from the tag by the first locator and the second locator and the distance (d1, d2, d3) between the first and second locators (201, 202, 203).

14. A locator system according to claim 13, wherein one or more of:

the locators include a mount configured to receive the calibration stick (303) specifically such that the first calibration stick tag (301) and the second calibration stick tag (302) are substantially equidistant from the locator; and
the calibration stick includes a body configured to specifically engage (303) with each of the locators such that the first calibration stick tag and the second calibration stick tag are substantially equidistant from the locator.

15. A computer readable medium comprising computer program code stored thereon, the computer readable medium and computer program code being configured to, when run on at least one processor, perform at least the following:

in respect of an arrangement of at least two locators (201, 202, 203) for determining the location of a tag (204) of unknown location using a direction of arrival measurement technique, the at least two locators (201, 202, 203) each capable of emitting a signal detectable by the other of the at least two locators and determining at least a relative direction (201, 202, 203), measured with respect to an origin-direction (208, 209, 210) of the particular locator, of a received signal from the tag and the other of the at least two locators, the locators being individually identifiable to each other, the method comprising providing for calibration of the arrangement;

i) based on an orientation ($\theta_1$, $\theta_2$) of a calibration stick (300) relative to the origin-direction (208, 209, 210) of a first locator of the at least two locators, the calibration stick comprising a first calibration stick tag (301) and a second calibration stick tag (302), the orientation of the calibration stick (300) based on a first calibration signal received from the first calibration stick tag (301) and a second calibration signal received from the second calibration stick tag (302) by the first locator of the at least two locators, the calibration stick tags having a known separation from one another and positioned relative to the first locator such that the first calibration stick tag (301) and the second calibration stick tag (302) are substantially equidistant from the first locator;
ii) based on a second-locator-direction ($\theta_A$, $\theta_B$, $\theta_C$) to the second locator of the at least two locators from the first locator relative to the origin-direction of the first locator, said direction based on a signal received from the second locator by the first locator;
iii) based on a first-locator-direction ($\Omega_A$, $\Omega_B$, $\Omega_C$) to the first locator from the second locator relative to the origin-direction (208, 209, 210) of the second locator, said direction based on a signal received from the first locator by the second locator;
iv) based on at least one of

a first-tag-direction ($\Omega_1$) to the first calibration stick tag (301) from the second locator relative to the origin-direction (208, 209, 210) of the second locator, said direction based on a third calibration signal received by the second locator from the first calibration stick tag (301); and
a second-tag-direction ($\Omega_2$) to the second calibration stick tag (302) from the second locator relative to the origin-direction (208, 209, 210) of the second locator, said direction based on a fourth calibration signal received by the second locator from the second calibration stick tag (302);

the calibration of the arrangement provided by determination of the distance (d1, d2, d3) between the first and second locators (201, 202, 203) based on the known distance (*l*) between first calibration stick tag (301) and the second calibration stick tag (302), the orientation of the calibration stick (300) relative to the first locator, the first-locator-direction ($\Omega_A$, $\Omega_B$, $\Omega_C$), the second-locator-direction ($\theta_A$, $\theta_B$, $\theta_C$) and the at least one of the first-tag-direction ($\Omega_1$) and the second-tag-direction ($\Omega_2$) thereby allowing for the tag (204) of unknown location to be located relative to the arrangement of at least two locators by the direction of arrival measurement technique using a signal received from the tag (204) by the first locator and the second locator (201, 202, 203) and the distance (d1, d2, d3) between the first and second locators (201, 202, 203).

**Patentansprüche**

1. Vorrichtung umfassend Mittel,
in Bezug auf eine Anordnung von mindestens zwei Ortungsgeräten (201, 202, 203) zum Bestimmen des Standorts eines Tags (204) mit unbekanntem Standort unter Verwendung einer Ankunftsrichtungs-Messtechnik, wobei die mindestens zwei Ortungsgeräte (201, 202, 203) jeweils in der Lage sind, ein Signal abzugeben, das durch das andere der mindestens zwei Ortungsgeräte erfassbar ist, und zum Bestimmen mindestens einer relativen Richtung (205, 206, 207), gemessen relativ zu einer Ursprungsrichtung (208, 209, 210) des jeweiligen Ortungsgerätes, eines empfangenen Signals von dem Tag (204) und dem anderen der mindestens zwei Ortungsgeräte (201, 202, 203), wobei die Ortungsgeräte untereinander individuell identifizierbar sind, konfiguriert, um eine Kalibrierung der Anordnung vorzusehen:

i) basierend auf einer Ausrichtung ($\theta_1$, $\theta_2$) eines Kalibrierstabs (300) relativ zur Ursprungsrichtung (208, 209, 210) eines ersten Ortungsgerätes der mindestens zwei Ortungsgeräte (201, 202, 203), wobei der Kalibrierstab ein erstes Kalibrierstab-Tag (301) und ein zweites Kalibrierstab-Tag (302) umfasst, wobei die Ausrichtung des Kalibrierstabs (300) auf einem ersten Kalibriersignal, das von dem ersten Kalibrierstab-Tag (301) empfangen wird, und einem zweiten Kalibriersignal, das von dem zweiten Kalibrierstab-Tag (302) durch das erste Ortungsgerät (201) der mindestens zwei Ortungsgeräte empfangen wird, basiert, wobei die Kalibrierstab-Tags (301, 302) eine bekannte Trennung voneinander aufweisen und relativ zu dem ersten Ortungsgerät so positioniert sind, dass das erste Kalibrierstab-Tag (301) und das zweite Kalibrierstab-Tag (302) im Wesentlichen äquidistant von dem ersten Ortungsgerät (201, 202, 203) sind;
ii) basierend auf einer zweiten Ortungsgeräterichtung ($\theta_A$, $\theta_B$, $\theta_C$) zu dem zweiten Ortungsgerät der mindestens zwei Ortungsgeräte von dem ersten Ortungsgerät relativ zur Ursprungsrichtung des ersten Ortungsgeräts, wobei die Richtung auf einem Signal basiert, das durch das erste Ortungsgerät von dem zweiten Ortungsgerät empfangen wird;
iii) basierend auf einer ersten Ortungsgeräterichtung ($\Omega_A$, $\Omega_B$, $\Omega_C$) zu dem ersten Ortungsgerät von dem zweiten Ortungsgerät relativ zur Ursprungsrichtung des zweiten Ortungsgeräts, wobei die erste Ortungsgeräterichtung auf einem Signal basiert, das durch das zweite Ortungsgerät von dem ersten Ortungsgerät empfangen wird;
iv) basierend auf

einer ersten Tag-Richtung ($\Omega_1$) zu dem ersten Kalibrierstab-Tag (301) von dem zweiten Ortungsgerät relativ zur Ursprungsrichtung (208, 209, 210) des zweiten Ortungsgeräts, wobei die Richtung auf einem dritten Kalibriersignal basiert, das durch das erste Kalibrierstab-Tag (301) von dem zweiten Ortungsgerät empfangen wird; und/oder

einer zweiten Tag-Richtung ($\Omega_2$) zu dem zweiten Kalibrierstab-Tag (302) von dem zweiten Ortungsgerät relativ zur Ursprungsrichtung (208, 209, 210) des zweiten Ortungsgeräts, wobei die Richtung auf einem vierten Kalibriersignal basiert, das durch das zweite Ortungsgerät von dem zweiten Kalibrierstab-Tag (302) empfangen wird;

wobei der Kalibrierung der Anordnung, die durch das Bestimmen des Abstands (d1, d2, d3) zwischen dem ersten und zweiten Ortungsgerät (201, 202, 203) basierend auf dem bekannten Abstand (/) zwischen dem ersten Kalibrierstab-Tag (301) und dem zweiten Kalibrierstab-Tag (302), der Ausrichtung des Kalibrierstabs (300) relativ zu dem ersten Ortungsgerät, der ersten Ortungsgeräterichtung ($\Omega_A$, $\Omega_B$, $\Omega_C$), der zweiten Ortungsgeräterichtung ($\theta_A$, $\theta_B$, $\theta_C$) und der mindestens einen der ersten Tag-Richtung ($\Omega_1$) und der zweiten Tag-Richtung ($\Omega_2$) vorgesehen ist, wodurch es möglich ist, das Tag (204) mit unbekanntem Standort relativ zur Anordnung von mindestens zwei Ortungsgeräten (201, 202, 203) durch die Ankunftsrichtungs-Messtechnik unter Verwendung eines von dem Tag (204) empfangenen Signals durch das erste Ortungsgerät und das zweite Ortungsgerät (201, 202, 203) und des Abstands (d1, d2, d3) zwischen dem ersten und zweiten Ortungsgerät (201, 202, 203) zu lokalisieren.

2. Vorrichtung nach Anspruch 1, wobei die Kalibrierung der Anordnung ohne vom Benutz eingegebenen Standortinformationen durchgeführt wird, die die Standorte der mindestens zwei Ortungsgeräte (201, 202, 203) relativ zueinander umfassen.

3. Vorrichtung nach Anspruch 1 oder Anspruch 2, wobei die Ortungsgeräte (201, 202, 203) zum Bestimmen des Standorts eines Tags (204) vom RFID-Typ konfiguriert sind, wobei das von dem Tag empfangene Signal ein RFID-Retoursignal umfasst, das als Reaktion auf ein Anregungssignal vom Ortungsgerät erzeugt wird.

4. Vorrichtung nach einem der vorhergehenden Ansprüche, wobei eines oder mehrere des ersten Kalibrierstab-Tags (301) und des zweiten Kalibrierstab-Tags (302) RFID-Tags sind und die entsprechenden ersten, zweiten, dritten und vierten Kalibrier-Signale RFID-Retoursignale umfassen, die als Reaktion auf ein Anregungssignal von dem Ortungsgerät (201, 202, 203) erzeugt werden, das die RFID-Retoursignale empfängt.

5. Vorrichtung nach einem der vorhergehenden Ansprüche, wobei jedes Ortungsgerät (201, 202, 203) zum Bestimmen der Ankunftsrichtung eines Signals relativ zur Ursprungsrichtung (208, 209, 210) konfiguriert ist, wobei die Ursprungsrichtung senkrecht zu einer Ortungsgeräte-Achse (104, 105, 106) liegt und jedes Ortungsgerät der Anordnung die Richtung ihrer Ortungsgeräte-Achse gemeinsam hat.

6. Vorrichtung nach einem der vorhergehenden Ansprüche, wobei das eine oder beide der ersten und zweiten Kalibrierstab-Tags (301, 302) mit einem Orientierungssensor in Kommunikation stehen, der zum Bestimmen der Ausrichtung des Kalibrierstabes relativ zu einem globalen Koordinatensystem konfiguriert ist, und wobei das eine oder beide des ersten und zweiten Kalibriersignals Orientierungswerte beinhaltet, die durch den Orientierungssensor bestimmt werden.

7. Vorrichtung nach Anspruch 6, wobei die Vorrichtung eine Kalibrierung als Reaktion auf die Orientierungswerte vorsieht, die anzeigen, dass der Kalibrierstab (300) stationär ist.

8. Vorrichtung nach einem der vorhergehenden Ansprüche, wobei jedes Ortungsgerät (201, 202, 203) mit einem Indikator (216, 217, 218) versehen ist, um zu zeigen, dass es relativ zu mindestens einem anderen Ortungsgerät kalibriert worden ist.

9. Vorrichtung nach einem der vorhergehenden Ansprüche, wobei die Anordnung mindestens ein drittes Ortungsgerät (201, 202, 203) beinhaltet und die Kalibrierung der Anordnung ferner das Bestimmen der Richtung und des Abstands zu einem oder mehreren der ersten und zweiten Ortungsgeräte vom dritten Ortungsgerät beinhaltet, wobei der Kalibrierstab (300) relativ zum dritten Ortungsgerät so positioniert ist, dass das erste Kalibrierstab-Tag (301) und das zweite Kalibrierstab-Tag (301) im Wesentlichen äquidistant von dem dritten Ortungsgerät sind.

10. Vorrichtung nach einem der vorhergehenden Ansprüche, wobei die Kalibrierung als Reaktion auf eine Bestimmung vorgesehen ist, welcher der beiden oder mehreren Ortungsgeräte (201, 202, 203) als erstes Ortungsgerät bezeichnet wird, da sich der Kalibrierstab (300) darin befindet, wobei die Bestimmung des ersten Ortungsgeräts vorgesehen ist durch;

    i) Benutzereingabe; und/oder
    ii) eine Signalstärke, die von dem ersten Kalibrierstab-Tag (301) und dem zweiten Kalibrierstift-Tag (302) empfangen wird und einen Schwellenwert überschreitet; und/oder
    iii) eine relative Signalstärke eines Signals, das von dem ersten Kalibrierstab-Tag (301) empfangen wird, und eines Signals, das von dem zweiten Kalibrierstab-Tag (302) empfangen wird; uns/oder
    iv) die relative Richtung der Signale, die von dem ersten Kalibrierstab-Tag (301) und dem zweiten Kalibrierstab-Tag (302) empfangen werden, die mit einer bekannten Form oder Konfiguration des Kalibrierstabes (300) übereinstimmen, wenn sie mit dem Ortungsgerät positioniert sind; und/oder
    v) einen Sensor des Ortungsgerätes (201, 202, 203), der damit die Platzierung des Kalibrierstabs (300) erfasst.

11. Vorrichtung nach einem der vorhergehenden Ansprüche, wobei die Vorrichtung eine Vorrichtung zum Bestimmen des Standorts einer Audioquelle für ein räumliches Audiosystem umfasst, um den Standort von Audioquellen in einem Raum zu bestimmen und eine räumliche Audiomischung zu ermöglichen.

12. Verfahren, umfassend:

    in Bezug auf eine Anordnung von mindestens zwei Ortungsgeräten (201, 202, 203) zum Bestimmen des Standorts eines Tags (204) mit unbekanntem Standort unter Verwendung einer Ankunftsrichtungs-Messtechnik, wobei die mindestens zwei Ortungsgeräte (201, 202, 203) jeweils in der Lage sind, ein Signal abzugeben, das durch das andere der mindestens zwei Ortungsgeräte erfassbar ist, und zum Bestimmen mindestens einer relativen Richtung (205, 206, 207), gemessen relativ zu einer Ursprungsrichtung (208, 209, 210) des jeweiligen Ortungsgerätes, eines empfangenen Signals von dem Tag (204) und dem anderen der mindestens zwei Ortungsgeräte (201, 202, 203), wobei die Ortungsgeräte untereinander individuell identifizierbar sind, wobei das Verfahren Kalibrieren der Anordnung vorsieht:

    i) basierend auf einer Ausrichtung $(\theta_1, \theta_2)$ eines Kalibrierstabes (300) relativ zu der Ursprungsrichtung (208) eines ersten Ortungsgerätes der mindestens zwei Ortungsgeräte (201, 202, 203), wobei der Kalibrierstab einen ersten Kalibrierstab-Tag (301) und einen zweiten Kalibrierstab-Tag (302) umfasst, wobei die Ausrichtung des Kalibrierstabes (300) auf einem ersten Kalibriersignal, das von dem ersten Kalibrierstab-Tag (301) empfangen wird, und einem zweiten Kalibriersignal, das von dem zweiten Kalibrierstab-Tag (302) durch das erste Ortungsgerät der mindestens zwei Ortungsgeräte (201, 202, 203) empfangen wird, basiert, wobei die Kalibrierstab-Tags (301, 302) eine bekannte Trennung voneinander aufweisen und relativ zu dem ersten Ortungsgerät so positioniert sind, dass das erste Kalibrierstab-Tag (301) und das zweite Kalibrierstab-Tag (302) im Wesentlichen äquidistant von dem ersten Ortungsgerät (201, 202, 203) sind;

ii) basierend auf einer zweiten Ortungsgeräterichtung ($\theta_A$, $\theta_B$, $\theta_C$) zu dem zweiten Ortungsgerät der mindestens zwei Ortungsgeräte von dem ersten Ortungsgerät relativ zur Ursprungsrichtung des ersten Ortungsgeräts, wobei die Richtung auf einem von dem ersten Ortungsgerät empfangenen Signal basiert;

iii) basierend auf einer ersten Ortungsgeräterichtung ($\Omega_A$, $\Omega_B$, $\Omega_C$) zu dem ersten Ortungsgerät von dem zweiten Ortungsgerät relativ zur Ursprungsrichtung des zweiten Ortungsgeräts, wobei die Richtung auf einem Signal basiert, das von dem ersten Ortungsgerät durch das zweite Ortungsgerät empfangen wird;

iv) basierend auf

einer ersten Tag-Richtung ($\Omega_1$) zu dem ersten Kalibrierstab-Tag (301) von dem zweiten Ortungsgerät relativ zur Ursprungsrichtung (208, 209, 210) des zweiten Ortungsgeräts, wobei die Richtung auf einem dritten Kalibriersignal basiert, das durch das zweite Ortungsgerät von dem ersten Kalibrierstab-Tag (301) empfangen wird; und/oder

einer zweiten Tag-Richtung ($\Omega_2$) zu dem zweiten Kalibrierstab-Tag (302) von dem zweiten Ortungsgerät relativ zur Ursprungsrichtung (208, 209, 210) des zweiten Ortungsgeräts, wobei die Richtung auf einem vierten Kalibriersignal basiert, das durch das zweite Ortungsgerät von dem zweiten Kalibrierstab-Tag (302) empfangen wird;

wobei die Kalibrierung der Anordnung, die durch das Bestimmen des Abstands (d1, d2, d3) zwischen dem ersten und zweiten Ortungsgerät (201, 202, 203) basierend auf dem bekannten Abstand (/) zwischen dem ersten Kalibrierstab-Tag (301) und dem zweiten Kalibrierstab-Tag (302), der Ausrichtung des Kalibrierstabs (300) relativ zu dem ersten Ortungsgerät, der ersten Ortungsgeräterichtung ($\Omega_A$, $\Omega_B$, $\Omega_C$), der zweiten Ortungsgeräterichtung ($\theta_A$, $\theta_B$, $\theta_C$) und der mindestens einen der ersten Tag-Richtung ($\Omega_1$) und der zweiten Tag-Richtung ($\Omega_2$) vorgesehen ist, wodurch es möglich ist, das Tag (204) mit unbekanntem Standort relativ zur Anordnung von mindestens zwei Ortungsgeräten durch die Ankunftsrichtungs-Messtechnik unter Verwendung eines von dem Tag (204) empfangenen Signals durch das erste Ortungsgerät und das zweite Ortungsgerät und des Abstands (d1, d2, d3) zwischen dem ersten und zweiten Ortungsgerät zu lokalisieren.

13. Ortungsgerätesystem umfassend mindestens zwei Ortungsgeräte (201, 202, 203) zum Bestimmen des Standorts eines Tags (204) mit unbekanntem Standort unter Verwendung einer Ankunftsrichtungs-Messtechnik, wobei die mindestens zwei Ortungsgeräte (201, 202, 203) jeweils in der Lage sind, ein Signal abzugeben, das durch das anderen der mindestens zwei Ortungsgeräte erfasst werden kann, und zum Bestimmen mindestens einer relativen Richtung (205, 206, 207) eines empfangenen Signals von dem Tag (204) und dem anderen der mindestens zwei Ortungsgeräte, gemessen relativ zu einer Ursprungsrichtung (208, 209, 210) des jeweiligen Ortungsgerätes, wobei die Ortungsgeräte individuell voneinander identifizierbar sind, wobei das System ferner einen Kalibrierstab (300) umfassend ein erstes Kalibrierstab-Tag (301) und ein zweites Kalibrierstab-Tag (302) und einen Computerprogrammcode beinhaltet, der konfiguriert ist, um, wenn er auf mindestens einem Prozessor mit zugehörigem Speicher abläuft:

Kalibrierung der Anordnung vorsieht:

i) basierend auf einer Ausrichtung des Kalibrierstabs (300) relativ zur Ursprungsrichtung (208, 209, 210) eines ersten Ortungsgerätes der mindestens zwei Ortungsgeräte (201, 202, 203), wobei die Ausrichtung des Kalibrierstabs auf einem ersten Kalibriersignal, das von dem ersten Kalibrierstab-Tag (301) empfangen wird, und einem zweiten Kalibriersignal, das von dem zweiten Kalibrierstab-Tag (302) durch das erste Ortungsgerät der mindestens zwei Ortungsgeräte empfangen wird, basiert, wobei die Kalibrierstab-Tags (301, 302) eine bekannte Trennung voneinander aufweisen und relativ zu dem ersten Ortungsgerät so positioniert sind, dass das erste Kalibrierungsstab-Tag und das zweite Kalibrierstab-Tag im Wesentlichen äquidistant von dem ersten Ortungsgerät sind;

ii) basierend auf einer zweiten Ortungsgeräterichtung ($\theta_A$, $\theta_B$, $\theta_C$) zu dem zweiten Ortungsgerät der mindestens zwei Ortungsgeräte von dem ersten Ortungsgerät relativ zur Ursprungsrichtung des ersten Ortungsgeräts, wobei die Richtung auf einem Signal basiert, das durch das erste Ortungsgerät von dem zweiten Ortungsgerät empfangen wird;

iii) basierend auf einer ersten Ortungsgeräterichtung ($\Omega_A$, $\Omega_B$, $\Omega_C$) zu dem ersten Ortungsgerät von dem zweiten Ortungsgerät relativ zur Ursprungsrichtung (208, 209, 210) des zweiten Ortungsgeräts, wobei die Richtung auf einem Signal basiert, das durch das zweite Ortungsgerät von dem ersten Ortungsgerät empfangen wird;

iv) basierend auf

einer ersten Tag-Richtung ($\Omega_1$) zu dem ersten Kalibrierstab-Tag (301) von dem zweiten Ortungsgerät relativ zur Ursprungsrichtung (208, 209, 210) des zweiten Ortungsgeräts, wobei die Richtung auf einem dritten Kalibriersignal basiert, das durch das zweite Ortungsgerät von dem ersten Kalibrierstab-Tag empfangen wird; und/oder

eine zweite Tag-Richtung ($\Omega_2$) zu dem zweiten Kalibrierstab-Tag (302) von dem zweiten Ortungsgerät relativ zur Ursprungsrichtung (208, 209, 210) des zweiten Ortungsgeräts, wobei die Richtung auf einem vierten Kalibriersignal basiert, das durch das zweite Ortungsgerät von dem zweiten Kalibrierstab-Tag empfangen wird;

wobei der Kalibrierung der Anordnung, die durch das Bestimmen des Abstands (d1, d2, d3) zwischen dem ersten und zweiten Ortungsgerät (201, 202, 203) basierend auf dem bekannten Abstand (*l*) zwischen dem ersten Kalibrierstab-Tag und dem zweiten Kalibrierstab-Tag, der Ausrichtung des Kalibrierstabs (300) relativ zu dem ersten Ortungsgerät, der ersten Ortungsgeräterichtung ($\Omega_A$, $\Omega_B$, $\Omega_C$) der zweiten Ortungsgeräterichtung ($\theta_A$, $\theta_B$, $\theta_C$) und der mindestens einen der ersten Tag-Richtung ($\Omega_1$) und der zweiten Tag-Richtung ($\Omega_2$) vorgesehen ist, wodurch es möglich ist, das Tag (204) mit unbekanntem Standort relativ zur Anordnung von mindestens zwei Ortungsgeräten (201, 202, 203) durch die Ankunftsrichtungs-Messtechnik unter Verwendung eines von dem Tag empfangenen Signals durch das erste Ortungsgerät und das zweite Ortungsgerät und des Abstands (d1, d2, d3) zwischen dem ersten und zweiten Ortungsgerät (201, 202, 203) zu lokalisieren.

14. Ortungssystem nach Anspruch 13, wobei:

die Ortungsgeräte eine Halterung beinhalten, die zum Aufnehmen des Kalibrierstabs (303) insbesondere so konfiguriert ist, dass das erste Kalibrierstab-Tag (301) und das zweite Kalibrierstab-Tag (302) im Wesentlichen äquidistant von dem Ortungsgerät sind; und/oder

der Kalibrierstab einen Körper beinhaltet, der zum spezifischen Eingreifen (303) in jeden der Ortungsgeräte konfiguriert ist, so dass das erste Kalibrierstab-Tag und das zweite Kalibrierstab-Tag im Wesentlichen äquidistant von dem Ortungsgerät sind.

15. Computerlesbares Medium, umfassend einen darauf gespeicherten Computerprogrammcode, wobei das computerlesbare Medium und der Computerprogrammcode dahingehend konfiguriert sind, dass sie, wenn sie auf mindestens einem Prozessor ablaufen, mindestens Folgendes durchführen:

in Bezug auf eine Anordnung von mindestens zwei Ortungsgeräten (201, 202, 203) zum Bestimmen des Standorts eines Tags (204) mit unbekanntem Standort unter Verwendung einer Ankunftsrichtungs-Messtechnik,

wobei die mindestens zwei Ortungsgeräte (201, 202, 203) jeweils in der Lage sind, ein Signal abzugeben, das durch das andere der mindestens zwei Ortungsgeräte erfassbar ist, und mindestens eine relative Richtung (201, 202, 203), gemessen relativ zu einer Ursprungsrichtung (208, 209, 210) des jeweiligen Ortungsgerätes, eines empfangenen Signals von dem Tag und dem anderen der mindestens zwei Ortungsgeräte bestimmen, wobei die Ortungsgeräte untereinander individuell identifizierbar sind, wobei das Verfahren Kalibrieren der Anordnung vorsieht;

i) basierend auf einer Ausrichtung ($\theta_1$, $\theta_2$) eines Kalibrierstabs (300) relativ zur Ursprungsrichtung (208, 209, 210) eines ersten Ortungsgerätes der mindestens zwei Ortungsgeräte, wobei der Kalibrierstab ein erstes Kalibrierstab-Tag (301) und ein zweites Kalibrierstab-Tag (302) umfasst, wobei die Ausrichtung des Kalibrierstabs (300) auf einem ersten Kalibriersignal, das von dem ersten Kalibrierstab-Tag (301) empfangen wird, und einem zweiten Kalibriersignal, das von dem zweiten Kalibrierstab-Tag (302) durch das erste Ortungsgerät der mindestens zwei Ortungsgeräte empfangen wird, basiert, wobei die Kalibrierstab-Tags eine bekannte Trennung voneinander aufweisen und relativ zu dem ersten Ortungsgerät so positioniert sind, dass das erste Kalibrierstab-Tag (301) und das zweite Kalibrierstab-Tag (302) im Wesentlichen äquidistant von dem ersten Ortungsgerät sind;

ii) basierend auf einer zweiten Ortungsgeräterichtung ($\theta_A$, $\theta_B$, $\theta_C$) zu dem zweiten Ortungsgerät der mindestens zwei Ortungsgeräte von dem ersten Ortungsgerät relativ zur Ursprungsrichtung des ersten Ortungsgeräts, wobei die Richtung auf einem von dem ersten Ortungsgerät empfangenen Signal basiert;

iii) basierend auf einer ersten Ortungsgeräterichtung ($\Omega_A$, $\Omega_B$, $\Omega_C$) zu dem ersten Ortungsgerät von dem zweiten Ortungsgerät relativ zur Ursprungsrichtung (208, 209, 210) des zweiten Ortungsgeräts, wobei die Richtung auf einem Signal basiert, das durch das zweite Ortungsgerät von dem ersten Ortungsgerät empfangen wird;
iv) basierend auf

einer ersten Tag-Richtung ($\Omega_1$) zu dem ersten Kalibrierstab-Tag (301) von dem zweiten Ortungsgerät relativ zur Ursprungsrichtung (208, 209, 210) des zweiten Ortungsgeräts, wobei die Richtung auf einem dritten Kalibriersignal basiert, das durch das zweite Ortungsgerät von dem ersten Kalibrierstab-Tag (301) empfangen wird; und/oder
einer zweiten Tag-Richtung ($\Omega_2$) zu dem zweiten Kalibrierstab-Tag (302) von dem zweiten Ortungsgerät relativ zur Ursprungsrichtung (208, 209, 210) des zweiten Ortungsgeräts, wobei die Richtung auf einem vierten Kalibriersignal basiert, das durch das zweite Ortungsgerät von dem zweiten Kalibrierstab-Tag (302) empfangen wird;

wobei der Kalibrierung der Anordnung, die durch das Bestimmen des Abstands (d1, d2, d3) zwischen dem ersten und zweiten Ortungsgerät (201, 202, 203) basierend auf dem bekannten Abstand (/) zwischen dem ersten Kalibrierstab-Tag (301) und dem zweiten Kalibrierstab-Tag (302), der Ausrichtung des Kalibrierstabs (300) relativ zu dem ersten Ortungsgerät, der ersten Ortungsgeräterichtung ($\Omega_A$, $\Omega_B$, $\Omega_C$), der zweiten Ortungsgeräterichtung ($\theta_A$, $\theta_B$, $\theta_C$) und der mindestens einen der ersten Tag-Richtung ($\Omega_1$) und der zweiten Tag-Richtung ($\Omega_2$) vorgesehen ist, wodurch es möglich ist, das Tag (204) mit unbekanntem Standort relativ zur Anordnung von mindestens zwei Ortungsgeräten durch die Ankunftsrichtungs-Messtechnik unter Verwendung eines von dem Tag (204) empfangenen Signals durch das erste Ortungsgerät und das zweite Ortungsgerät (201, 202, 203) und des Abstands (d1, d2, d3) zwischen dem ersten und zweiten Ortungsgerät (201, 202, 203) zu lokalisieren.

**Revendications**

1.  Appareil comprenant des moyens, relativement à un agencement d'au moins deux dispositifs de localisation (201, 202, 203) destinés à déterminer l'emplacement d'une étiquette (204) d'emplacement inconnu en utilisant une technique de mesure de la direction d'arrivée, les au moins deux dispositifs de localisation (201, 202, 203) pouvant chacun émettre un signal détectable par l'autre des au moins deux dispositifs de localisation et déterminer au moins une direction relative (205, 206, 207), mesurée par rapport à une direction d'origine (208, 209, 210) du dispositif de localisation particulier, d'un signal reçu depuis l'étiquette (204) et l'autre des au moins deux dispositifs de localisation (201, 202, 203), les dispositifs de localisation étant identifiables individuellement l'un par rapport à l'autre, configurés pour effectuer un étalonnage de l'agencement :

    i) sur la base d'une orientation ($\theta_1$, $\theta_2$) d'un bâton d'étalonnage (300) par rapport à la direction d'origine (208, 209, 210) d'un premier dispositif de localisation parmi les au moins deux dispositifs de localisation (201, 202, 203), le bâton d'étalonnage comprenant une première étiquette de bâton d'étalonnage (301) et une deuxième étiquette de bâton d'étalonnage (302), l'orientation du bâton d'étalonnage (300) étant basée sur un premier signal d'étalonnage reçu depuis la première étiquette de bâton d'étalonnage (301) et un deuxième signal d'étalonnage reçu depuis la deuxième étiquette de bâton d'étalonnage (302) par le premier dispositif de localisation (201) parmi les au moins deux dispositifs de localisation, les étiquettes de bâton d'étalonnage (301, 302) ayant une séparation connue l'une de l'autre et étant positionnées par rapport au premier dispositif de localisation de telle sorte que la première étiquette de bâton d'étalonnage (301) et la deuxième étiquette de bâton d'étalonnage (302) sont sensiblement équidistantes du premier dispositif de localisation (201, 202, 203) ;
    ii) sur la base d'une deuxième direction de dispositif de localisation ($\theta_A$, $\theta_B$, $\theta_C$) vers le deuxième dispositif de localisation parmi les au moins deux dispositifs de localisation depuis le premier dispositif de localisation par rapport à la direction d'origine du premier dispositif de localisation, ladite deuxième direction de dispositif de localisation étant basée sur un signal reçu depuis le deuxième dispositif de localisation par le premier dispositif de localisation ;
    iii) sur la base d'une première direction de dispositif de localisation ($\Omega_A$, $\Omega_B$, $\Omega_C$) vers le premier dispositif de localisation depuis le deuxième dispositif de localisation par rapport à la direction d'origine du deuxième dispositif de localisation, ladite première direction de dispositif de localisation étant basée sur un signal reçu depuis le premier dispositif de localisation par le deuxième dispositif de localisation ;
    iv) sur la base d'au moins une direction parmi

    une première direction d'étiquette ($\Omega_1$) vers la première étiquette de bâton d'étalonnage (301) depuis le deuxième dispositif de localisation par rapport à la direction d'origine (208, 209, 210) du deuxième dispositif de localisation, ladite direction étant basée sur un troisième signal d'étalonnage reçu par le deuxième dispositif de localisation depuis la première étiquette de bâton d'étalonnage (301) ; et

une deuxième direction d'étiquette ($\Omega_2$) vers la deuxième étiquette de bâton d'étalonnage (302) depuis le deuxième dispositif de localisation par rapport à la direction d'origine (208, 209, 210) du deuxième dispositif de localisation, ladite direction étant basée sur un quatrième signal d'étalonnage reçu par le deuxième dispositif de localisation depuis la deuxième étiquette de bâton d'étalonnage (302) ;

l'étalonnage de l'agencement étant effectué par détermination de la distance (d1, d2, d3) entre le premier et le deuxième dispositif de localisation (201, 202, 203) sur la base de la distance connue (*l*) entre la première étiquette de bâton d'étalonnage (301) et la deuxième étiquette de bâton d'étalonnage (302), de l'orientation du bâton d'étalonnage (300) par rapport au premier dispositif de localisation, de la première direction de dispositif de localisation ($\Omega_A$, $\Omega_B$, $\Omega_C$), de la deuxième direction de dispositif de localisation ($\theta_A$, $\theta_B$, $\theta_C$), et de l'au moins une direction parmi la première direction d'étiquette ($\Omega_1$) et la deuxième direction d'étiquette ($\Omega_2$), permettant ainsi de localiser l'étiquette (204) d'emplacement inconnu par rapport à l'agencement d'au moins deux dispositifs de localisation (201, 202, 203) par la technique de mesure de la direction d'arrivée en utilisant un signal reçu depuis l'étiquette (204) par le premier dispositif de localisation et le deuxième dispositif de localisation (201, 202, 203) et la distance (d1, d2, d3) entre le premier et le deuxième dispositif de localisation (201, 202, 203).

2.	Appareil selon la revendication 1, dans lequel l'étalonnage de l'agencement est effectué en l'absence d'informations d'emplacement de saisie utilisateur comprenant les emplacements des au moins deux dispositifs de localisation (201, 202, 203) l'un par rapport à l'autre.

3.	Appareil selon la revendication 1 ou la revendication 2, dans lequel les dispositifs de localisation (201, 202, 203) sont configurés pour déterminer l'emplacement d'une étiquette (204) de type RFID, le signal reçu depuis l'étiquette comprenant un signal RFID de retour, généré en réponse à un signal d'excitation provenant du dispositif de localisation.

4.	Appareil selon une quelconque revendication précédente, dans lequel la première étiquette de bâton d'étalonnage (301) et/ou la deuxième étiquette de bâton d'étalonnage (302) sont des étiquettes RFID, et les premier, deuxième, troisième et quatrième signaux d'étalonnage correspondants comprennent des signaux RFID de retour, générés en réponse à un signal d'excitation provenant du dispositif de localisation (201, 202, 203) recevant les signaux RFID de retour.

5.	Appareil selon une quelconque revendication précédente dans lequel chaque dispositif de localisation (201, 202, 203) est configuré pour déterminer la direction d'arrivée d'un signal par rapport à la direction d'origine (208, 209, 210), la direction d'origine étant perpendiculaire à un axe de dispositif de localisation (104, 105, 106), tous les dispositifs de localisation de l'agencement ayant la direction de leur axe de dispositif de localisation en commun.

6.	Appareil selon une quelconque revendication précédente, dans lequel la première et/ou la deuxième étiquette de bâton d'étalonnage (301, 302) sont en communication avec un capteur d'orientation configuré pour déterminer l'orientation du bâton d'étalonnage par rapport à un système de coordonnées global, et dans lequel le premier et/ou le deuxième signal d'étalonnage comportent des valeurs d'orientation déterminées par ledit capteur d'orientation.

7.	Appareil selon la revendication 6, l'appareil effectuant un étalonnage en réponse au fait que les valeurs d'orientation sont représentatives d'un bâton d'étalonnage (300) qui est stationnaire.

8.	Appareil selon une quelconque revendication précédente dans lequel chaque dispositif de localisation (201, 202, 203) est pourvu d'un indicateur (216, 217, 218) pour montrer qu'il a été étalonné par rapport à au moins un autre dispositif de localisation.

9.	Appareil selon une quelconque revendication précédente dans lequel l'agencement comporte au moins un troisième dispositif de localisation (201, 202, 203) et l'étalonnage de l'agencement comporte en outre la détermination de la direction et de la distance vers le premier et/ou le deuxième dispositif de localisation depuis le troisième dispositif de localisation, le bâton d'étalonnage (300) étant positionné par rapport au troisième dispositif de localisation de telle sorte que la première étiquette de bâton d'étalonnage (301) et la deuxième étiquette de bâton d'étalonnage (301) sont sensiblement équidistantes du troisième dispositif de localisation.

10.	Appareil selon une quelconque revendication précédente, dans lequel l'étalonnage est effectué en réponse à une détermination de celui des au moins deux dispositifs de localisation (201, 202, 203) qui est désigné comme le premier dispositif de localisation en vertu du fait que le bâton d'étalonnage (300) est localisé avec celui-ci, la détermination du premier dispositif de localisation étant effectuée par un ou plusieurs des éléments suivants :

    i) une saisie utilisateur ;

    ii) une intensité de signal reçue depuis la première étiquette de bâton d'étalonnage (301) et la deuxième étiquette de bâton d'étalonnage (302) qui dépasse un seuil ;

    iii) une intensité de signal relative d'un signal reçu depuis la première étiquette de bâton d'étalonnage (301) et d'un signal reçu depuis la deuxième étiquette de bâton d'étalonnage (302) ;

    iv) la direction relative de signaux reçus depuis la première étiquette de bâton d'étalonnage (301) et la deuxième étiquette de bâton d'étalonnage (302) qui est en accord avec une forme ou configuration connue du bâton d'étalonnage (300) lorsqu'il est positionné avec le dispositif de localisation ;

    v) un capteur du dispositif de localisation (201, 202, 203) qui détecte un positionnement du bâton d'étalonnage (300).

11. Appareil selon une quelconque revendication précédente, l'appareil comprenant un appareil de détermination d'emplacement de source audio pour un système audio spatial pour déterminer l'emplacement de sources audio dans un espace et effectuer un mélange audio spatial.

12. Procédé comprenant :

    relativement à un agencement d'au moins deux dispositifs de localisation (201, 202, 203) destinés à déterminer l'emplacement d'une étiquette (204) d'emplacement inconnu en utilisant une technique de mesure de la direction d'arrivée, les au moins deux dispositifs de localisation (201, 202, 203) pouvant chacun émettre un signal détectable par l'autre des au moins deux dispositifs de localisation et déterminer au moins une direction relative (205, 206, 207), mesurée par rapport à une direction d'origine (208, 209, 210) du dispositif de localisation particulier, d'un signal reçu depuis l'étiquette (204) et l'autre des au moins deux dispositifs de localisation (201, 202, 203), les dispositifs de localisation étant identifiables individuellement l'un par rapport à l'autre, le procédé comprenant la réalisation d'un étalonnage de l'agencement :

        i) sur la base d'une orientation ($\theta_1$, $\theta_2$) d'un bâton d'étalonnage (300) par rapport à la direction d'origine (208) d'un premier dispositif de localisation parmi les au moins deux dispositifs de localisation (201, 202, 203), le bâton d'étalonnage comprenant une première étiquette de bâton d'étalonnage (301) et une deuxième étiquette de bâton d'étalonnage (302), l'orientation du bâton d'étalonnage (300) étant basée sur un premier signal d'étalonnage reçu depuis la première étiquette de bâton d'étalonnage (301) et un deuxième signal d'étalonnage reçu depuis la deuxième étiquette de bâton d'étalonnage (302) par le premier dispositif de localisation parmi les au moins deux dispositifs de localisation (201, 202, 203), les étiquettes de bâton d'étalonnage (301, 302) ayant une séparation connue l'une de l'autre et étant positionnées par rapport au premier dispositif de localisation de telle sorte que la première étiquette de bâton d'étalonnage (301) et la deuxième étiquette de bâton d'étalonnage (302) sont sensiblement équidistantes du premier dispositif de localisation (201, 202, 203) ;

    ii) sur la base d'une deuxième direction de dispositif de localisation ($\theta_A$, $\theta_B$, $\theta_C$) vers le deuxième dispositif de localisation parmi les au moins deux dispositifs de localisation depuis le premier dispositif de localisation par rapport à la direction d'origine du premier dispositif de localisation, ladite direction étant basée sur un signal reçu depuis le deuxième dispositif de localisation par le premier dispositif de localisation ;

    iii) sur la base d'une première direction de dispositif de localisation ($\Omega_A$, $\Omega_B$, $\Omega_C$) vers le premier dispositif de localisation depuis le deuxième dispositif de localisation par rapport à la direction d'origine du deuxième dispositif de localisation, ladite direction étant basée sur un signal reçu depuis le premier dispositif de localisation par le deuxième dispositif de localisation ;

    iv) sur la base d'au moins une direction parmi

        une première direction d'étiquette ($\Omega_1$) vers la première étiquette de bâton d'étalonnage (301) depuis le deuxième dispositif de localisation par rapport à la direction d'origine (208, 209, 210) du deuxième dispositif de localisation, ladite direction étant basée sur un troisième signal d'étalonnage reçu par le deuxième dispositif de localisation depuis la première étiquette de bâton d'étalonnage (301) ; et
        une deuxième direction d'étiquette ($\Omega_2$) vers la deuxième étiquette de bâton d'étalonnage (302) depuis le deuxième dispositif de localisation par rapport à la direction d'origine (208, 209, 210) du deuxième dispositif de localisation, ladite direction étant basée sur un quatrième signal d'étalonnage reçu par le deuxième dispositif de localisation depuis la deuxième étiquette de bâton d'étalonnage (302) ;

l'étalonnage de l'agencement étant effectué par détermination de la distance (d1, d2, d3) entre le premier et le deuxième dispositif de localisation (201, 202, 203) sur la base de la distance connue ($l$) entre la première étiquette de bâton d'étalonnage (301) et la deuxième étiquette de bâton d'étalonnage (302), de l'orientation du bâton d'étalonnage (300) par rapport au premier dispositif de localisation, de la première direction de dispositif de localisation ($\Omega_A$, $\Omega_B$, $\Omega_C$), de la deuxième direction de dispositif de localisation ($\theta_A$, $\theta_B$, $\theta_C$), et de l'au moins une direction parmi la première direction d'étiquette ($\Omega_1$) et la deuxième direction d'étiquette ($\Omega_2$), permettant ainsi de localiser l'étiquette (204) d'emplacement inconnu par rapport à l'agencement d'au moins deux dispositifs de localisation (201, 202, 203) par la technique de mesure de la direction d'arrivée en utilisant un signal reçu depuis l'étiquette (204) par le premier dispositif de localisation et le deuxième dispositif de localisation (201, 202, 203) et la distance (d1, d2, d3) entre le premier et le deuxième dispositif de localisation.

13. Système de localisation comprenant au moins deux dispositifs de localisation (201, 202, 203) destinés à déterminer l'emplacement d'une étiquette (204) d'emplacement inconnu en utilisant une technique de mesure de la direction d'arrivée, les au moins deux dispositifs de localisation (201, 202, 203) pouvant chacun émettre un signal détectable par l'autre des au moins deux dispositifs de localisation et déterminer au moins une direction relative (205, 206, 207) d'un signal reçu depuis l'étiquette (204) et l'autre des au moins deux dispositifs de localisation, mesurée par rapport à une direction d'origine (208, 209, 210) du dispositif de localisation particulier, les dispositifs de localisation étant identifiables individuellement l'un par rapport à l'autre, le système comportant en outre un bâton d'étalonnage (300) comprenant une première étiquette de bâton d'étalonnage (301) et une deuxième étiquette de bâton d'étalonnage (302), et un code de programme informatique configuré pour, lorsqu'il est exécuté sur au moins un processeur ayant une mémoire associée :

effectuer un étalonnage de l'agencement :

i) sur la base d'une orientation du bâton d'étalonnage (300) par rapport à la direction d'origine (208, 209, 210) d'un premier dispositif de localisation parmi les au moins deux dispositifs de localisation (201, 202, 203), l'orientation du bâton d'étalonnage étant basée sur un premier signal d'étalonnage reçu depuis la première étiquette de bâton d'étalonnage (301) et un deuxième signal d'étalonnage reçu depuis la deuxième étiquette de bâton d'étalonnage (302) par le premier dispositif de localisation parmi les au moins deux dispositifs de localisation, les étiquettes de bâton d'étalonnage (301, 302) ayant une séparation connue l'une de l'autre et étant positionnées par rapport au premier dispositif de localisation de telle sorte que la première étiquette de bâton d'étalonnage et la deuxième étiquette de bâton d'étalonnage sont sensiblement équidistantes du premier dispositif de localisation ;

ii) sur la base d'une deuxième direction de dispositif de localisation ($\theta_A$, $\theta_B$, $\theta_C$) vers le deuxième dispositif de localisation parmi les au moins deux dispositifs de localisation depuis le premier dispositif de localisation par rapport à la direction d'origine du premier dispositif de localisation, ladite direction étant basée sur un signal reçu depuis le deuxième dispositif de localisation par le premier dispositif de localisation ;

iii) sur la base d'une première direction de dispositif de localisation ($\Omega_A$, $\Omega_B$, $\Omega_C$) vers le premier dispositif de localisation depuis le deuxième dispositif de localisation par rapport à la direction d'origine (208, 209, 210) du deuxième dispositif de localisation, ladite direction étant basée sur un signal reçu depuis le premier dispositif de localisation par le deuxième dispositif de localisation ;

iv) sur la base d'au moins une direction parmi

une première direction d'étiquette ($\Omega_1$) vers la première étiquette de bâton d'étalonnage (301) depuis le deuxième dispositif de localisation par rapport à la direction d'origine (208, 209, 210) du deuxième dispositif de localisation, ladite direction étant basée sur un troisième signal d'étalonnage reçu par le deuxième dispositif de localisation depuis la première étiquette de bâton d'étalonnage ; et
une deuxième direction d'étiquette ($\Omega_2$) vers la deuxième étiquette de bâton d'étalonnage (302) depuis le deuxième dispositif de localisation par rapport à la direction d'origine (208, 209, 210) du deuxième dispositif de localisation, ladite direction étant basée sur un quatrième signal d'étalonnage reçu par le deuxième dispositif de localisation depuis la deuxième étiquette de bâton d'étalonnage ;

l'étalonnage de l'agencement étant effectué par détermination de la distance (d1, d2, d3) entre le premier et le deuxième dispositif de localisation (201, 202, 203) sur la base de la distance connue ($l$) entre la première étiquette de bâton d'étalonnage et la deuxième étiquette de bâton d'étalonnage, de l'orientation du bâton d'étalonnage (300) par rapport au premier dispositif de localisation, de la première direction de dispositif de localisation ($\Omega_A$, $\Omega_B$, $\Omega_C$), de la deuxième direction de dispositif de localisation ($\theta_A$, $\theta_B$, $\theta_C$), et de l'au moins une direction parmi la première direction d'étiquette ($\Omega_1$) et la deuxième direction d'étiquette ($\Omega_2$), permettant ainsi de localiser l'étiquette (204) d'emplacement inconnu par rapport à l'agencement d'au moins deux dispositifs de localisation (201, 202, 203) par la technique de mesure de la direction d'arrivée en utilisant un signal reçu depuis l'étiquette par le premier dispositif de localisation et le deuxième dispositif de localisation et la distance (d1, d2, d3) entre le premier et le deuxième dispositif de localisation (201, 202, 203).

14. Système de localisation selon la revendication 13, dans lequel :

les dispositifs de localisation comportent un support configuré pour recevoir le bâton d'étalonnage (303) spécifiquement de telle sorte que la première étiquette de bâton d'étalonnage (301) et la deuxième étiquette de bâton d'étalonnage (302) sont sensiblement équidistantes du dispositif de localisation ; et/ou le bâton d'étalonnage comporte un corps configuré pour entrer spécifiquement en prise (303) avec chacun des dispositifs de localisation de telle sorte que la première étiquette de bâton d'étalonnage et la deuxième étiquette de bâton de l'étalonnage sont sensiblement équidistantes du dispositif de localisation.

15. Support lisible par ordinateur comprenant un code de programme informatique stocké par-dessus, le support lisible par ordinateur et le code de programme informatique étant configurés pour, lorsque ce dernier est exécuté sur au moins un processeur, effectuer au moins une des opérations suivantes :

relativement à un agencement d'au moins deux dispositifs de localisation (201, 202, 203) destinés à déterminer l'emplacement d'une étiquette (204) d'emplacement inconnu en utilisant une technique de mesure de la direction d'arrivée, les au moins deux dispositifs de localisation (201, 202, 203) pouvant chacun émettre un signal détectable par l'autre des au moins deux dispositifs de localisation et déterminer au moins une direction relative (201, 202, 203), mesurée par rapport à une direction d'origine (208, 209, 210) du dispositif de localisation particulier, d'un signal reçu depuis l'étiquette et l'autre des au moins deux dispositifs de localisation, les dispositifs de localisation étant identifiables individuellement l'un par rapport à l'autre, le procédé comprenant la réalisation d'un étalonnage de l'agencement ;

i) sur la base d'une orientation ($\theta_1$, $\theta_2$) d'un bâton d'étalonnage (300) par rapport à la direction d'origine (208, 209, 210) d'un premier dispositif de localisation parmi les au moins deux dispositifs de localisation, le bâton d'étalonnage comprenant une première étiquette de bâton d'étalonnage (301) et une deuxième étiquette de bâton d'étalonnage (302), l'orientation du bâton d'étalonnage (300) étant basée sur un premier signal d'étalonnage reçu depuis la première étiquette de bâton d'étalonnage (301) et un deuxième signal d'étalonnage reçu depuis la deuxième étiquette de bâton d'étalonnage (302) par le premier dispositif de localisation parmi les au moins deux dispositifs de localisation, les étiquettes de bâton d'étalonnage ayant une séparation connue l'une de l'autre et étant positionnées par rapport au premier dispositif de localisation de telle sorte que la première étiquette de bâton d'étalonnage (301) et la deuxième étiquette de bâton d'étalonnage (302) sont sensiblement équidistantes du premier dispositif de localisation ;

ii) sur la base d'une deuxième direction de dispositif de localisation ($\theta_A$, $\theta_B$, $\theta_C$) vers le deuxième dispositif de localisation parmi les au moins deux dispositifs de localisation depuis le premier dispositif de localisation par rapport à la direction d'origine du premier dispositif de localisation, ladite direction étant basée sur un signal reçu depuis le deuxième dispositif de localisation par le premier dispositif de localisation ;

iii) sur la base d'une première direction de dispositif de localisation ($\Omega_A$, $\Omega_B$, $\Omega_C$) vers le premier dispositif de localisation depuis le deuxième dispositif de localisation par rapport à la direction d'origine (208, 209, 210) du deuxième dispositif de localisation, ladite direction étant basée sur un signal reçu depuis le premier dispositif de localisation par le deuxième dispositif de localisation ;

iv) sur la base d'au moins une direction parmi

une première direction d'étiquette ($\Omega_1$) vers la première étiquette de bâton d'étalonnage (301) depuis le deuxième dispositif de localisation par rapport à la direction d'origine (208, 209, 210) du deuxième dispositif de localisation, ladite direction étant basée sur un troisième signal d'étalonnage reçu par le deuxième dispositif de localisation depuis la première étiquette de bâton d'étalonnage (301) ; et une deuxième direction d'étiquette ($\Omega_2$) vers la deuxième étiquette de bâton d'étalonnage (302) depuis le deuxième dispositif de localisation par rapport à la direction d'origine (208, 209, 210) du deuxième dispositif de localisation, ladite direction basée sur un quatrième signal d'étalonnage reçu par le deuxième dispositif de localisation depuis la deuxième étiquette de bâton d'étalonnage (302) ;

l'étalonnage de l'agencement étant effectué par détermination de la distance (d1, d2, d3) entre le premier et le deuxième dispositif de localisation (201, 202, 203) sur la base de la distance connue (*l*) entre la première étiquette de bâton d'étalonnage (301) et la deuxième étiquette de bâton d'étalonnage (302), de l'orientation du bâton d'étalonnage (300) par rapport au premier dispositif de localisation, de la première direction de dispositif de localisation ($\Omega_A$, $\Omega_B$, $\Omega_C$), de la deuxième direction de dispositif de localisation ($\theta_A$, $\theta_B$, $\theta_C$), et de l'au moins une direction parmi la première direction d'étiquette ($\Omega_1$) et la deuxième direction d'étiquette ($\Omega_2$), permettant ainsi de localiser l'étiquette (204) d'emplacement inconnu par rapport à l'agencement d'au moins deux dispositifs de localisation par la technique de mesure de la direction d'arrivée en utilisant un signal reçu depuis l'étiquette (204) par le premier dispositif de localisation et le deuxième dispositif de localisation (201, 202, 203) et la distance (d1, d2, d3) entre le premier et le deuxième dispositif de localisation (201, 202, 203).

Figure 1

Figure 2

# Figure 3

# Figure 4

Figure 5

218

217

302

Figure 6

216

201

208

$\theta_1$

$\theta_2$

301

$\Omega_c$

$\Omega_2$

$\Omega_1$

Figure 7

Figure 8

Figure 9

900

| Based on a known distance between first calibration stick tag and the second calibration stick tag, the orientation of the calibration stick relative to the first locator, the first-locator-direction, the second-locator-direction, the first-tag-direction and/or the second-tag-direction |

901

| providing for calibration of the arrangement by determination of the distance between the first and second locators |

Figure 10      1000

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013179090 A

- US 20070060098 A